# EUROPEAN PATENT APPLICATION

(11) **EP 4 836 406 A1**
(43) Date of publication of application: **04.11.2026**
(21) Application number: 24918079.5
(22) Date of filing: 05.09.2024
(51) Int. Cl.: H04N 19/167

(54) **ENCODING METHOD AND DEVICE, AND DECODING METHOD AND DEVICE**

(30) Priority: 18.01.2024 CN 202410077119; 05.02.2024 CN 202410166019
(71) Applicant: Huawei Technologies Co., Ltd., Shenzhen, Guangdong 518129 (CN)
(72) Inventor: MAO, Jue, Shenzhen, Guangdong 518129 (CN); ZHAO, Yin, Shenzhen, Guangdong 518129 (CN); KANG, Ning, Shenzhen, Guangdong 518129 (CN)
(74) Representative: Eisenführ Speiser
(86) International application number: PCT/CN2024/117240
(87) International publication number: WO 2025/152470

(57) **Abstract**

Embodiments of this application relate to the field of media technologies, and disclose encoding and decoding methods and apparatuses, to improve image quality of AI-based image coding. The method includes: performing AI-based encoding on an input image to obtain a feature map; performing entropy encoding on the feature map to obtain a bitstream; performing a transform operation on a target region of the input image to obtain transform coefficients; encoding the transform coefficients into the bitstream; and encoding position information into the bitstream. The position information indicates a position of the target region in the input image.

## Description

This application claims priorities to Chinese Patent Application No. 202410077119.2, filed with the China National Intellectual Property Administration on January 18, 2024 and entitled "ENCODING METHOD", and to Chinese Patent Application No. 202410166019.7, filed with the China National Intellectual Property Administration on February 5, 2024 and entitled "ENCODING AND DECODING METHOD AND APPARATUS", both of which are incorporated herein by reference in their entireties.

### TECHNICAL FIELD

Embodiments of this application relate to the field of media technologies, and in particular, to encoding and decoding methods and apparatuses.

### BACKGROUND

Currently, artificial intelligence (Artificial Intelligence, AI)-based image coding has made breakthrough progress. AI-based image coding significantly improves compression efficiency in comparison with common image coding standards under same subjective quality. AI-based image coding is widely used in various fields. For example, AI-based image coding can be applied to cloud storage, visual surveillance, autonomous vehicles and devices, image capturing, storage, and management, and real-time monitoring and media distribution of visual data.

In lossy coding at low-to-medium bitrates, AI-based image coding schemes achieve significantly better compression ratios than traditional image coding schemes at a same quality level. However, at extremely high bitrates or under near-visually-lossless conditions, image quality of AI-based image coding is poorer due to factors such as network capacity and network generalization.

### SUMMARY

Embodiments of this application provide an encoding method, to improve image quality of AI-based image coding. To achieve the foregoing objectives, the following technical solutions are used in embodiments of this application.

According to a first aspect, an embodiment of this application provides an encoding method. The method includes: performing AI-based encoding on an input image to obtain a feature map; performing entropy encoding on the feature map to obtain a bitstream; performing a transform operation on a target region of the input image to obtain transform coefficients; encoding the transform coefficients into the bitstream; and encoding position information into the bitstream. The position information indicates a position of the target region in the input image.

According to the method provided in embodiments of this application, quality enhancement is additionally performed on a partial region of an image according to a conventional encoding scheme, to compensate for a disadvantage of significant local distortion in image quality caused by limitations in AI-based encoding network capacity and generalization. In comparison with performing pure AI-based encoding on the input image, in this case, additionally performing quality enhancement on the partial region of the image according to the conventional encoding scheme can improve overall image quality of AI-based image encoding.

In a possible implementation, the target region may be divided into a plurality of image blocks, and the foregoing transform operation is performed on the plurality of image blocks to obtain the transform coefficients.

According to the method provided in embodiments of this application, the partial region of the input image is additionally divided into a plurality of image blocks, and a transform operation is performed on the partial region of the input image, thereby improving image quality of the partial region of the input image. In comparison with performing pure AI-based encoding on the input image, in this case, additionally performing the transform operation on the partial region of the input image can improve image quality of AI-based image coding.

In a possible implementation, the position information may be entropy encoded into the bitstream.

It can be learned that the position information indicating the position of the target region in the input image may be encoded into the bitstream in an entropy encoding manner.

In a possible implementation, the transform coefficients may be entropy encoded into the bitstream.

It can be seen that, the transform coefficients indicating coefficients used to perform the transform operation on the target region may be encoded into the bitstream in an entropy encoding manner.

In a possible implementation, the transform coefficients are quantized, and quantized transform coefficients are encoded into the bitstream. A bit depth associated with the transform coefficients can be reduced by quantization.

In a possible implementation, a transform parameter may be encoded (entropy encoded) into the bitstream. The transform parameter is a transform parameter used in the foregoing transform operation.

In a possible implementation, the transform operation may include at least one of discrete cosine transform (discrete cosine transform, DCT), discrete Fourier transform (discrete fourier transform, DFT), or discrete wavelet transform (discrete wavelet transform, DWT).

According to the method provided in embodiments of this application, the transform operation such as DCT, DFT, or DWT is additionally performed on the partial region of the input image, thereby improving image quality of the partial region of the input image. In comparison with performing pure AI-based encoding on the input image, in this case, additionally performing the transform operation on the partial region of the input image can improve image quality of AI-based image coding.

In a possible implementation, the position information is mask (mask) image information, the mask image information includes a first region, and the first region indicates the target region. For example, a mask image may include 0 and 1, and a region in which 1 is located is the target region.

It can be learned that the position information indicating the position of the target region in the input image may be stored in a form of a mask image.

In a possible implementation, the transform coefficients may be residuals.

According to a second aspect, an embodiment of this application provides a decoding method. The method includes: performing entropy decoding on a bitstream to obtain a feature map; performing AI-based decoding on the feature map to obtain a reconstructed image; performing entropy decoding on the bitstream to obtain transform coefficients; performing an inverse transform operation on the transform coefficients to obtain reconstructed pixel values of a target region; performing entropy decoding on the bitstream to obtain position information; and determining a fused image based on the position information, the reconstructed pixel values of the target region, and the reconstructed image. The position information indicates a position of the target region in the reconstructed image.

According to the method provided in embodiments of this application, quality enhancement is additionally performed on a partial region of an image according to a conventional decoding scheme, to compensate for a disadvantage of significant local distortion in image quality caused by limitations in AI-based decoding network capacity and generalization. In comparison with performing pure AI-based encoding on the bitstream to obtain the reconstructed image, in this case, additionally performing quality enhancement on the partial region of the image according to a conventional decoding scheme can improve overall image quality of AI-based image decoding.

In a possible implementation, the target region in the reconstructed image may be determined based on the position information; and pixel values of the target region in the reconstructed image is updated based on the reconstructed pixel values, to obtain the fused image.

In a possible implementation, entropy decoding is performed on the bitstream to obtain quantized transform coefficients; and inverse quantization is performed on the quantized transform coefficients to obtain the transform coefficients.

In a possible implementation, inverse quantization may be performed on the transform coefficients.

According to a third aspect, an embodiment of this application provides an encoding apparatus. The apparatus includes an encoding unit and a transform unit. The encoding unit is configured to perform AI-based encoding on an input image to obtain a feature map. The encoding unit is further configured to perform entropy encoding on the feature map to obtain a bitstream. The transform unit is configured to perform a transform operation on a target region of the input image to obtain transform coefficients. The encoding unit is further configured to encode the transform coefficients into the bitstream. The encoding unit is further configured to encode position information into the bitstream, where the position information indicates a position of the target region in the input image.

In a possible implementation, the transform unit is specifically configured to: divide the target region into a plurality of image blocks; and perform the transform operation on the plurality of image blocks to obtain the transform coefficients.

In a possible implementation, the transform coefficients are quantized, and quantized transform coefficients are encoded into the bitstream.

According to a fourth aspect, an embodiment of this application provides a decoding apparatus. The apparatus includes a decoding unit, a transform unit, and a fusion unit. The decoding unit is configured to perform entropy decoding on a bitstream to obtain a feature map. The decoding unit is further configured to perform AI-based decoding on the feature map to obtain a reconstructed image. The decoding unit is further configured to perform entropy decoding on the bitstream to obtain transform coefficients. The transform unit is configured to perform an inverse transform operation on the transform coefficients to obtain reconstructed pixel values of a target region. The decoding unit is further configured to perform entropy decoding on the bitstream to obtain position information, where the position information indicates a position of the target region. The fusion unit is configured to determine a fused image based on the position information, the reconstructed pixel values of the target region, and the reconstructed image.

In a possible implementation, the fusion unit is specifically configured to: determine the target region in the reconstructed image based on the position information; and update pixel values of the target region in the reconstructed image based on the reconstructed pixel values, to obtain the fused image.

In a possible implementation, the decoding unit is specifically configured to: perform entropy decoding on the bitstream to obtain quantized transform coefficients; and perform inverse quantization on the quantized transform coefficients to obtain the transform coefficients.

According to a fifth aspect, an embodiment of this application further provides an encoding apparatus. The apparatus includes at least one processor. When the at least one processor executes program code or instructions, the method according to any one of the first aspect or the possible implementations of the first aspect is implemented.

Optionally, the apparatus may further include at least one memory, and the at least one memory is configured to store the program code or the instructions.

According to a sixth aspect, an embodiment of this application further provides a decoding apparatus. The apparatus includes at least one processor. When the at least one processor executes program code or instructions, the method according to any one of the second aspect or the possible implementations of the second aspect is implemented.

According to a seventh aspect, an embodiment of this application further provides a bitstream storage method, where the method includes: obtaining and storing a bitstream obtained based on the method according to any one of the first aspect or the possible implementations of the first aspect.

According to an eighth aspect, an embodiment of this application further provides a bitstream storage apparatus. The apparatus is configured to: obtain and store a bitstream obtained based on the method according to any one of the first aspect or the possible implementations of the first aspect.

According to a ninth aspect, an embodiment of this application further provides a bitstream transmission method, where the method includes: obtaining and transmitting a bitstream obtained based on the method according to any one of the first aspect or the possible implementations of the first aspect.

According to a tenth aspect, an embodiment of this application further provides a bitstream transmission apparatus. The apparatus is configured to: obtain and transmit a bitstream obtained based on the method according to any one of the first aspect or the possible implementations of the first aspect.

According to an eleventh aspect, an embodiment of this application further provides a computer-readable storage medium, where the computer-readable storage medium stores a bitstream obtained based on the method according to any one of the first aspect or the possible implementations of the first aspect.

According to a twelfth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect or the possible implementations of the first aspect.

Optionally, the chip may be an integrated circuit.

According to a thirteenth aspect, an embodiment of this application further provides a computer-readable storage medium, configured to store a computer program. The computer program is used to implement the method according to any one of the first aspect or the possible implementations of the first aspect.

According to a fourteenth aspect, an embodiment of this application further provides a computer program product including instructions. When the computer program product runs on a computer, the computer is enabled to implement the method according to any one of the first aspect or the possible implementations of the first aspect.

The encoding and decoding apparatuses, the computer storage medium, the computer program product, and the chip provided in embodiments are all configured to perform the encoding and decoding methods provided above. Therefore, for beneficial effect that can be achieved by the encoding apparatus, the decoding apparatus, the computer storage medium, the computer program product, and the chip, refer to the beneficial effect of the encoding and decoding methods provided above. Details are not described herein again.

### BRIEF DESCRIPTION OF DRAWINGS

To describe technical solutions in embodiments of this application more clearly, the following briefly describes accompanying drawings used in descriptions of embodiments. It is clear that the accompanying drawings in the following descriptions show merely some embodiments of this application, and a person of ordinary skill in the art may still derive other accompanying drawings from these accompanying drawings without creative efforts.
FIG. 1a is an example block diagram of a coding system according to an embodiment of this application;
FIG. 1b is an example block diagram of a video coding system according to an embodiment of this application;
FIG. 2 is an example block diagram of a video encoder according to an embodiment of this application;
FIG. 3 is an example block diagram of a video decoder according to an embodiment of this application;
FIG. 4 is an example block diagram of a video coding device according to an embodiment of this application;
FIG. 5 is an example block diagram of an apparatus according to an embodiment of this application;
FIG. 6 is a diagram of a neural network-based image compression method according to an embodiment of this application;
FIG. 7 is a diagram of an end-to-end image encoding framework according to an embodiment of this application;
FIG. 8 is a diagram of a structure of a neural network according to an embodiment of this application;
FIG. 9 is a diagram of a structure of a video communication system according to an embodiment of this application;
FIG. 10 is a schematic flowchart of an encoding method according to an embodiment of this application;
FIG. 11 is a schematic flowchart of a decoding method according to an embodiment of this application;
FIG. 12 is a diagram of a structure of an encoding apparatus according to an embodiment of this application;
FIG. 13 is a diagram of a structure of a decoding apparatus according to an embodiment of this application;
FIG. 14 is a diagram of a structure of a chip according to an embodiment of this application;
FIG. 15 is a diagram of a structure of an electronic device according to an embodiment of this application;
FIG. 16 is a diagram of a structure of another electronic device according to an embodiment of this application;
FIG. 17 is a diagram of a structure of a neural network according to an embodiment of this application;
FIG. 18 is a diagram of a structure of a video coding for machine system according to an embodiment of this application;
FIG. 19 is a diagram of a structure of a bitstream according to an embodiment of this application;
FIG. 20 is a diagram of layered coding according to an embodiment of this application; and
FIG. 21 is a diagram of end-to-end image coding based on a hyper-prior structure according to an embodiment of this application.

### DESCRIPTION OF EMBODIMENTS

The following clearly and completely describes technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments in embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but are not intended to describe a particular order of the objects.

In addition, terms "includes", "have", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another step or unit inherent to the process, method, product, or device.

It should be noted that, in descriptions of embodiments of this application, terms such as "example" or "for example" indicate giving an example, an illustration, or a description. Any embodiment or design solution described as "example" or "for example" in embodiments of this application should not be explained as being more preferred or having more advantages than another embodiment or design solution. Exactly, use of the word "example", "for example", or the like is intended to present a related concept in a specific manner.

First, the terms in embodiments of this application are explained.

Joint photographic experts group (joint photographic experts group, JPEG) artificial intelligence (artificial intelligence, AI) is a learning-based image coding standard that provides a single-stream and compact compressed-domain representation and significantly improves compression efficiency in comparison with common image coding standards under same subjective quality. The JPEG AI is widely used in various fields. For example, the JPEG AI can be applied to cloud storage, visual surveillance, autonomous vehicles and devices, image capturing, storage, and management, and real-time monitoring and media distribution of visual data.

A convolutional neural network (CNN) is a neural network including a convolution layer. The neural network may further include modules such as an activation layer (for example, a ReLU or a PReLU), a pooling layer (pooling layer), a batch normalization layer (BN layer), and a fully connected layer (Fully Connected layer). Conventional convolutional neural networks include LeNet, AlexNet, VGGNet, ResNet, and the like. A basic CNN includes a backbone network and a head network. A complex CNN includes a backbone network, a neck network, and a head network.

A feature map (feature map) is three-dimensional data output by a convolutional layer, an activation layer, a pooling layer, a batch normalization layer, and the like in a convolutional neural network. Three dimensions are referred to as a width (Width), a height (Height), and a channel (Channel), respectively.

A backbone network (backbone network) is a first part of a convolutional neural network, and is used to extract feature maps of a plurality of scales from an input image. Generally, the backbone network includes a convolutional layer, a pooling layer, an activation layers, and the like, and does not include a fully connected layer. Generally, a feature map output by a layer close to the input image in the backbone network has high resolution (a width and a height) but a small quantity of channels. Typical backbone networks include, for example, VGG-16, ResNet-50, and ResNeXt-101.

A head network (head network) is a last part of a convolutional neural network, and is used to process a feature map to obtain a prediction result output by the neural network. A common head network includes a fully connected layer, a softmax module, and the like.

A neck network (neck network) is a middle part of a convolutional neural network, and is used to further integrate feature maps generated by a backbone network to obtain a new feature map. Common networks are a feature pyramid network (Feature Pyramid Network, FPN) in a Faster R-CNN.

A bottleneck structure (bottleneck structure) is a multi-layer network structure. Input data of a network first passes through one or more neural network layers to obtain intermediate data, and then the intermediate data passes through one or more neural network layers to obtain output data. A data amount of the intermediate data (that is, a product of a width, a height, and a quantity of channels) is less than an input data amount and an output data amount.

Data coding includes two parts: data encoding and data decoding. Data encoding is performed at a source side (or usually referred to as an encoder side), and usually includes processing (for example, compressing) raw data to reduce an amount of data required for representing the raw data (for more efficient storage and/or transmission). Data decoding is performed at a destination side (or usually referred to as a decoder side), and usually includes inverse processing relative to the encoder side to reconstruct the raw data. "Encoding/decoding" of data in embodiments of this application should be understood as "encoding" or "decoding" of the data. A combination of an encoding part and a decoding part is also referred to as encoding and decoding (encoding and decoding, CODEC).

In a case of lossless data coding, the raw data can be reconstructed. In other words, reconstructed raw data has same quality as the raw data (it is assumed that no transmission loss or other data loss occurs during storage or transmission). In a case of lossy data coding, further compression is performed through, for example, quantization, to reduce an amount of data required for representing the raw data, and the raw data cannot be fully reconstructed at the decoder side. In other words, quality of reconstructed raw data is lower or worse than quality of the raw data.

Embodiments of this application may be applied to video data, other data having a compression/decompression requirement, and the like. The following describes embodiments of this application by using coding of the video data (which is briefly referred to as video coding) as an example. For other types of data (for example, image data, audio data, integer data, and other data having a compression/decompression requirement), refer to the following descriptions. Details are not described in embodiments of this application. It should be noted that, compared with video coding, in a process of coding data such as the audio data and the integer data, the data does not need to be partitioned into blocks, but the data may be directly coded.

Video coding typically refers to processing of a sequence of images, where the sequence of images forms a video or a video sequence. In the field of video coding, the terms "picture (picture)", "frame (frame)", and "image (image)" may be used as synonyms.

Several video coding standards are used for "lossy hybrid video encoding and decoding" (that is, spatial and temporal prediction in pixel domain is combined with 2D transform coding for applying quantization in transform domain). Each image of a video sequence is typically partitioned into a set of non-overlapping blocks, and coding is typically performed at a block level. To be specific, an encoder usually processes, that is, encodes, a video at a block (video block) level. For example, a predicted block is generated through spatial (intra) prediction and temporal (inter) prediction; the predicted block is subtracted from a current block (a block being processed/to be processed) to obtain a residual block; and the residual block is transformed in transform domain and quantized to reduce an amount of data to be transmitted (compressed). At the decoder side, an inverse processing part relative to the encoder is performed on an encoded block or a compressed block to reconstruct the current block for representation. Further, the encoder needs to repeat the processing step of the decoder, so that the encoder and the decoder generate same prediction (for example, intra prediction and inter prediction) and/or a same reconstruction pixel, for processing, that is, for encoding a subsequent block.

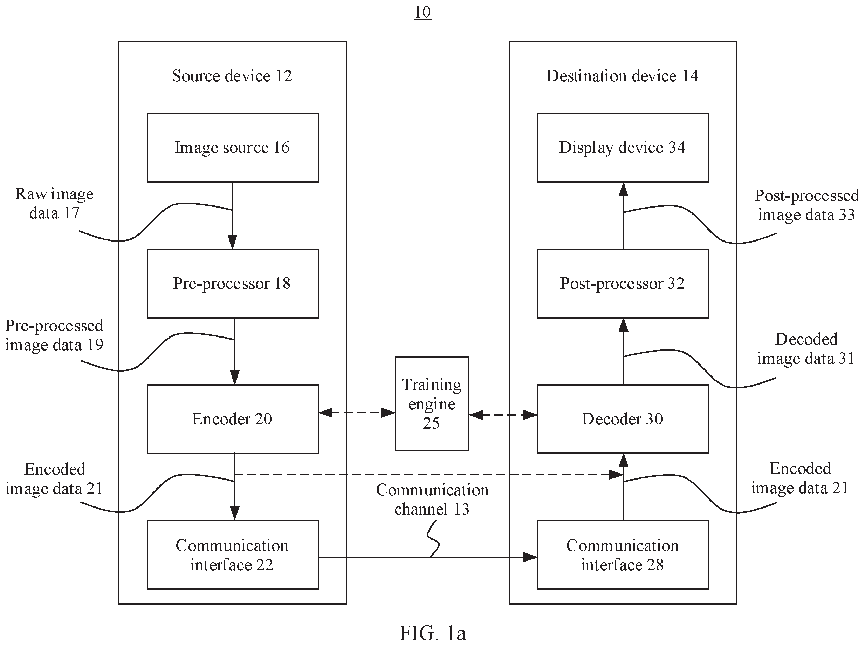

In the following embodiments of a coding system 10, an encoder 20 and a decoder 30 are described based on FIG. 1a to FIG. 3.

FIG. 1a is an example block diagram of the coding system 10 according to an embodiment of this application, for example, a video coding system 10 (or referred to as a coding system 10 for short) that may use technologies in embodiments of this application. A video encoder 20 (or referred to as an encoder 20 for short) and a video decoder 30 (or referred to as a decoder 30 for short) of the video coding system 10 represent devices that may be configured to perform technologies according to various examples described in embodiments of this application.

As shown in FIG. 1a, the coding system 10 includes a source device 12. The source device 12 is configured to provide encoded image data 21 such as an encoded image to a destination device 14 for decoding the encoded image data 21.

The source device 12 includes the encoder 20, and may additionally, that is, optionally, include an image source 16, a pre-processor (or a pre-processing unit) 18, for example, an image pre-processor, and a communication interface (or a communication unit) 22.

The image source 16 may include or may be any type of image capturing device configured to capture an image in the real world, and/or any type of image generation device, for example, a computer graphics processing unit configured to generate a computer animated image, or any type of device configured to obtain and/or provide an image in the real world, a computer-generated image (for example, content on a screen, a virtual reality (virtual reality, VR) image, and/or any combination thereof (for example, an augmented reality (augmented reality, AR) image)). The image source may be any type of memory or storage storing any of the aforementioned images.

To distinguish between processing performed by the pre-processor (or the pre-processing unit) 18, an image (or image data) 17 may also be referred to as n raw image (or raw image data) 17.

The pre-processor 18 is configured to: receive the raw image data 17, and perform pre-processing on the raw image data 17 to obtain a pre-processed image (or pre-processed image data) 19. Pre-processing performed by the pre-processor 18 may, for example, include trimming, color format conversion (for example, conversion from RGB to YCbCr), color correction, or de-noising. It may be understood that the pre-processing unit 18 may be an optional component.

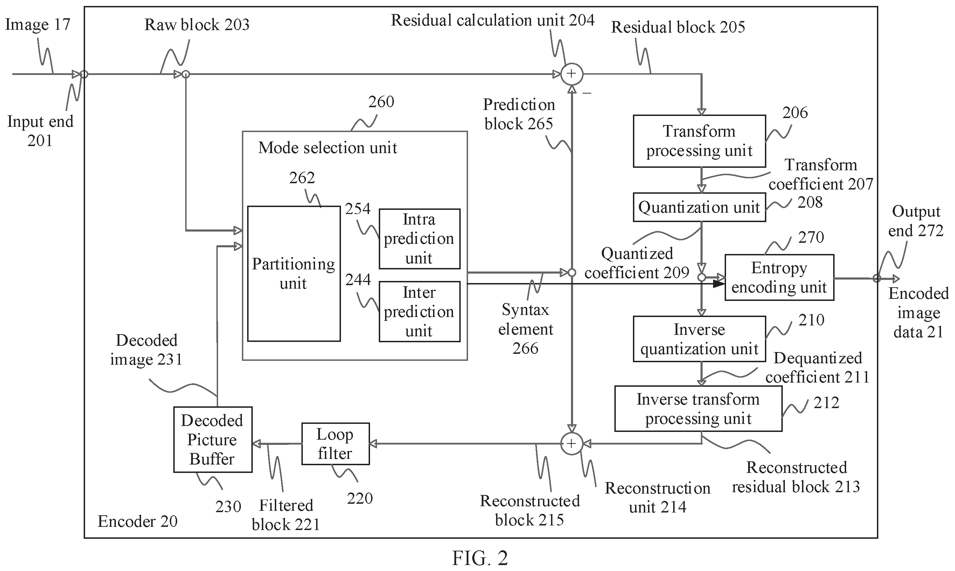

The video encoder (or the encoder) 20 is configured to: receive the pre-processed image data 19 and provide encoded image data 21 (further details are described below, for example, based on FIG. 2).

A communication interface 22 of the source device 12 may be configured to: receive the encoded image data 21, and send the encoded image data 21 (or any further processed version thereof) through a communication channel 13 to another device like the destination device 14 or any other device for storage or direct reconstruction.

The destination device 14 includes the decoder 30, and may additionally, that is, optionally, include a communication interface (or a communication unit) 28, a post-processor (or a post-processing unit) 32, and a display device 34.

The communication interface 28 of the destination device 14 is configured to: receive the encoded image data 21 (or any further processed version thereof) directly from the source device 12 or from any other source device like a storage device, for example, an encoded image data storage device, and provide the encoded image data 21 to the decoder 30.

The communication interface 22 and the communication interface 28 may be configured to transmit or receive the encoded image data (or encoded data) 21 via a direct communication link between the source device 12 and the destination device 14, for example, a direct wired or wireless connection, or via any kind of network, for example, a wired or wireless network or any combination thereof, or any kind of private and public network, or any kind of combination thereof.

The communication interface 22 may be, for example, configured to: package the encoded image data 21 into an appropriate format, for example, packets, and/or process the encoded image data using any kind of transmission encoding or processing for transmission over a communication link or communication network.

The communication interface 28, forming the counterpart of the communication interface 22, may be, for example, configured to: receive the transmitted data and process the transmitted data using any type of corresponding transmission decoding or processing and/or de-packaging to obtain the encoded image data 21.

Both the communication interface 22 and the communication interface 28 may be configured as unidirectional communication interfaces as indicated by an arrow for the communication channel 13 in FIG. 1a pointing from the source device 12 to the destination device 14, or bidirectional communication interfaces, and may be configured to: send and receive messages and the like, to establish a connection, confirm and exchange any other information related to the communication link and/or data transmission, for example, encoded image data transmission.

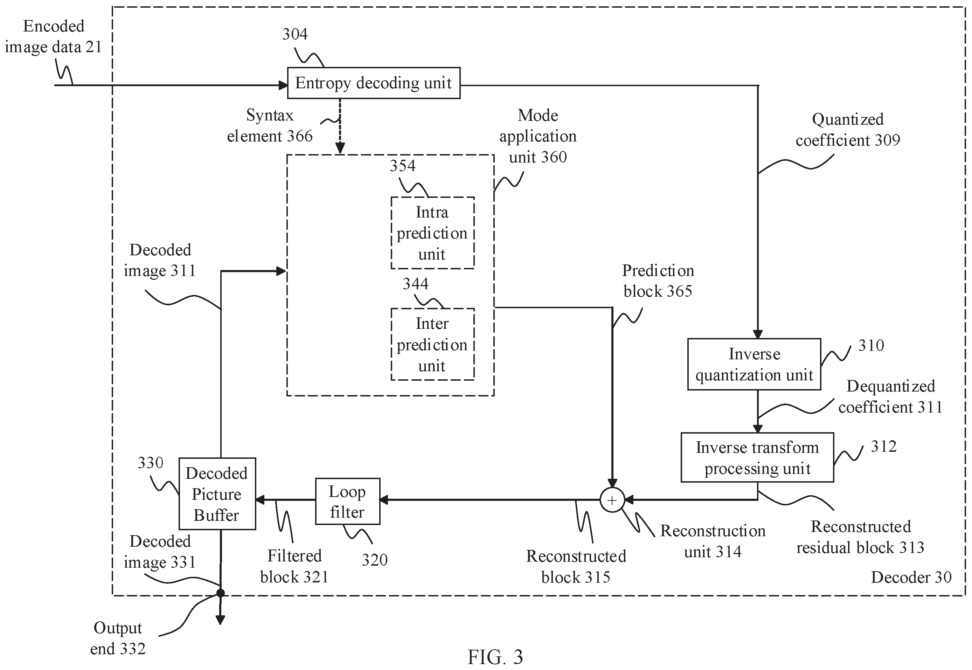

The video decoder (or the decoder) 30 is configured to: receive the encoded image data 21 and provide decoded image data (or decoded image data) 31 (further details are described below, for example, based on FIG. 3).

The post-processor 32 is configured to perform post-processing on the decoded image data 31 (also referred to as reconstructed image data) such as a decoded image, to obtain post-processed image data 33 such as a post-processed image. Post-processing performed by the post-processing unit 32 may include, for example, color format conversion (for example, conversion from YCbCr to RGB), color correction, trimming, resampling, or any other processing for generating the decoded image data 31 for display by, for example, the display device 34.

The display device 34 is configured to receive the post-processed image data 33, to display an image to a user, a viewer, or the like. The display device 34 may be or include any type of display for representing the reconstructed image, for example, an integrated or external display or monitor. For example, the display may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS) display, a digital light processor (digital light processor, DLP), or any type of another display.

The coding system 10 further includes a training engine 25. The training engine 25 is configured to train the encoder 20 (especially an entropy encoding unit 270 in the encoder 20) or the decoder 30 (especially an entropy decoding unit 304 in the decoder 30), to perform entropy encoding on a to-be-encoded image block based on estimated probability distribution obtained through estimation. For detailed descriptions of the training engine 25, refer to the following method embodiments.

Although FIG. 1a shows the source device 12 and the destination device 14 as separate devices, a device embodiment may alternatively include both the source device 12 and the destination device 14 or functions of both the source device 12 and the destination device 14, that is, the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

As will be apparent for a skilled person based on the descriptions, the existence and (exact) division into different units or functions in the source device 12 and/or the destination device 14 as shown in FIG. 1a may vary depending on an actual device and application.

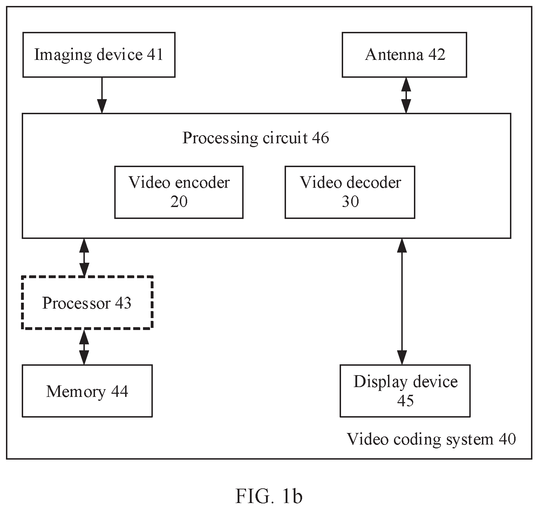

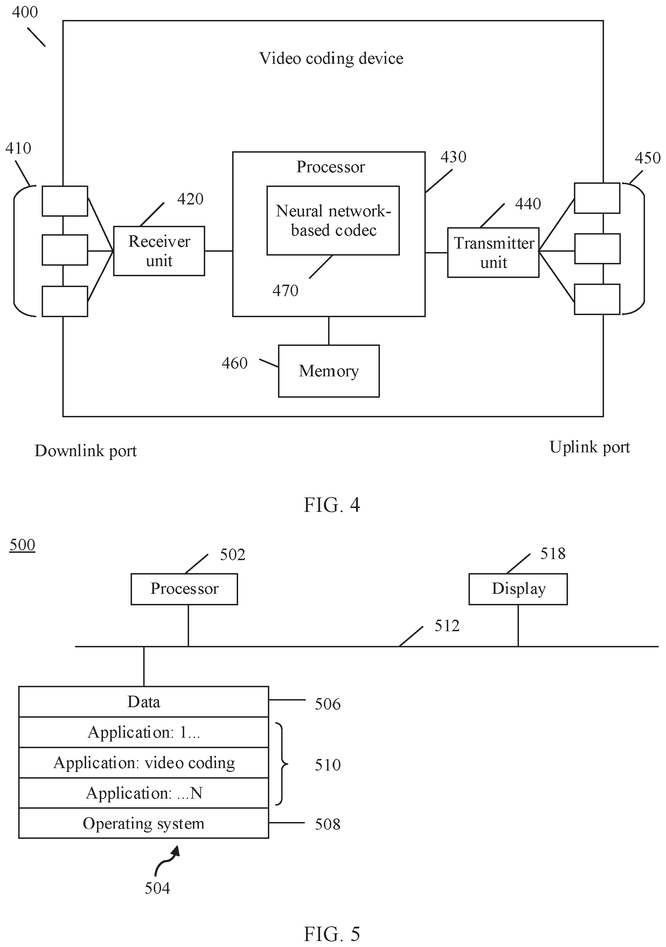

Refer to FIG. 1b. FIG. 1b is an example block diagram of a video coding system 40 according to an embodiment of this application. The encoder 20 (for example, the video encoder 20) or the decoder 30 (for example, the video decoder 30) or both the encoder 20 and the decoder 30 may be implemented through a processing circuit of the video coding system 40 shown in FIG. 1b, for example, one or more microprocessors, a digital signal processor (digital signal processor, DSP), an application-specific integrated circuit (application-specific integrated circuit, ASIC), a field-programmable gate array (field-programmable gate array, FPGA), discrete logic, hardware, a video coding dedicated processor, or any combination thereof. Refer to FIG. 2 and FIG. 3. FIG. 2 is an example block diagram of a video encoder according to an embodiment of this application, and FIG. 3 is an example block diagram of a video decoder according to an embodiment of this application. The encoder 20 may be implemented through a processing circuit 46, to include various modules described based on the encoder 20 in FIG. 2 and/or any other encoder system or subsystem described in this specification. The decoder 30 may be implemented through the processing circuit 46, to include various modules described based on the decoder 30 in FIG. 3 and/or any other decoder system or subsystem described in this specification. The processing circuit 46 may be configured to perform the various operations as discussed later. As shown in FIG. 4, if the technologies are implemented partially in software, a device may store instructions for the software in a suitable non-transitory computer-readable storage medium, and may execute the instructions in hardware using one or more processors to perform the technologies in embodiments of this application. Either of the video encoder 20 and the video decoder 30 may be integrated as a part of a combined encoder/decoder (encoder/decoder, CODEC) in a single device, for example, as shown in FIG. 1b.

The source device 12 and the destination device 14 may include any one of various devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content service servers or content delivery servers), broadcast receiver devices, broadcast transmitter devices, monitor devices, or the like, and may use no or any type of operating system. The source device 12 and the destination device 14 may also be devices in a cloud computing scenario, for example, virtual machines in the cloud computing scenario. In some cases, the source device 12 and the destination device 14 may be equipped with components for wireless communication. Therefore, the source device 12 and the destination device 14 may be wireless communication devices.

A virtual scenario application (application, APP), for example, a virtual reality (virtual reality, VR) application, an augmented reality (augmented reality, AR) application, or a mixed reality (mixed reality, MR) application, may be installed on the source device 12 and the destination device 14, and the VR application, the AR application, or the MR application may be run based on a user operation (for example, tapping, touching, sliding, shaking, or voice control). The source device 12 and the destination device 14 may capture images/videos of any object in an environment via a camera and/or a sensor, and then display a virtual object on a display device based on the captured images/videos. The virtual object may be a virtual object (namely, an object in a virtual environment) in a VR scenario, an AR scenario, or an MR scenario.

It should be noted that, in embodiments of this application, the virtual scenario applications in the source device 12 and the destination device 14 may be built-in applications of the source device 12 and the destination device 14, or may be applications that are provided by a third-party service provider and that are installed by a user. This is not specifically limited herein.

In addition, a real-time video transmission application, for example, a live broadcast application, may be installed on the source device 12 and the destination device 14. The source device 12 and the destination device 14 may capture images/videos via the camera, and then display the captured images/videos on the display device.

In some cases, the video coding system 10 shown in FIG. 1a is merely an example and the technologies provided in embodiments of this application are applicable to video coding settings (for example, video encoding or video decoding). These settings do not necessarily include any data communication between an encoding device and a decoding device. In other examples, data is retrieved from a local memory, sent through a network, or the like. A video encoding device may encode data and store encoded data into the memory, and/or a video decoding device may retrieve data from the memory and decode the data. In some examples, encoding and decoding are performed by devices that do not communicate with each other, but simply encode data into the memory and/or retrieve and decode data from the memory.

Refer to FIG. 1b. FIG. 1b is an example block diagram of a video coding system 40 according to an embodiment of this application. As shown in FIG. 1b, the video coding system 40 may include an imaging device 41, the video encoder 20, the video decoder 30 (and/or a video encoder/decoder implemented through a processing circuit 46), an antenna 42, one or more processors 43, one or more memories 44, and/or a display device 45.

As shown in FIG. 1b, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present the video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM) or a dynamic random access memory (dynamic random access memory, DRAM)) or a non-volatile memory (for example, a flash memory). In a non-limitative example, the memory 44 may be implemented through a cache memory. In other examples, the processing circuit 46 may include a memory (for example, a cache) to implement an image buffer.

In some examples, the video encoder 20 implemented through a logic circuit may include an image buffer (which is implemented through, for example, the processing circuit 46 or the memory 44) and a graphics processing unit (which is implemented through, for example, the processing circuit 46). The graphics processing unit may be communicatively coupled to the image buffer. The graphics processing unit may be included in the video encoder 20 implemented through the processing circuit 46, to implement various modules described with reference to FIG. 2 and/or any other encoder system or subsystem described in this specification. The logic circuit may be configured to perform various operations described in this specification.

In some examples, the video decoder 30 may be implemented through the processing circuit 46 in a similar manner, to implement various modules described based on the video decoder 30 in FIG. 3 and/or any other decoder system or subsystem described in this specification. In some examples, the video decoder 30 implemented through the logic circuit may include an image buffer (which is implemented through the processing circuit 46 or the memory 44) and a graphics processing unit (which is implemented through, for example, the processing circuit 46). The graphics processing unit may be communicatively coupled to the image buffer. The graphics processing unit may be included in the video decoder 30 implemented through the processing circuit 46, to implement various modules described with reference to FIG. 3 and/or any other decoder system or subsystem described in this specification.

In some examples, the antenna 42 may be configured to receive an encoded bitstream of video data. As described, the encoded bitstream may include data, an indicator, an index value, mode selection data, or the like related to video frame encoding described in this specification, for example, data related to coding partitioning (for example, a transform coefficient or a quantized transform coefficient, an optional indicator (as described), and/or data defining coding partitioning). The video coding system 40 may further include the video decoder 30 that is coupled to the antenna 42 and that is configured to decode the encoded bitstream. The display device 45 is configured to present a video frame.

It should be understood that in embodiments of this application, for the example described with reference to the video encoder 20, the video decoder 30 may be configured to perform a reverse process. With regard to a signaling syntax element, the video decoder 30 may be configured to: receive and parse such a syntax element and correspondingly decode related video data. In some examples, the video encoder 20 may perform entropy encoding on the syntax element into an encoded video bitstream. In such examples, the video decoder 30 may parse the syntax element and decode the associated video data accordingly.

For ease of description, embodiments of this application are described based on versatile video coding (versatile video coding, VVC) reference software or high-efficiency video coding (high-efficiency video coding, HEVC) developed by the joint collaboration team on video coding (joint collaboration team on video coding, JCT-VC) constituted by the ITU-T video coding experts group (video coding experts group, VCEG) and the ISO/IEC moving picture experts group (moving picture experts group, MPEG). A person of ordinary skill in the art understands that embodiments of this application are not limited to the HEVC or the VVC.

### Encoder and encoding method

As shown in FIG. 2, the video encoder 20 includes an input end (or an input interface) 201, a residual calculation unit 204, a transform processing unit 206, a quantization unit 208, an inverse quantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output end (or an output interface) 272. The mode selection unit 260 may include an inter prediction unit 244, an intra prediction unit 254, and a partitioning unit 262. The inter prediction unit 244 may include a motion estimation unit and a motion compensation unit (not shown). The video encoder 20 shown in FIG. 2 may also be referred to as a hybrid video encoder or a video encoder based on a hybrid video codec.

### Images and image partitioning (images and blocks)

The encoder 20 may be configured to receive, for example, via the input end 201, an image (or image data) 17, for example, an image in a sequence of images forming a video or video sequence. The received image or image data may also be a pre-processed image (or pre-processed image data) 19. For ease of simplicity, the image 17 is used in the following descriptions. The image 17 may also be referred to as a current image or a to-be-encoded image (in particular in video coding to distinguish the current image from other images, for example, previously encoded and/or decoded images of a same video sequence, namely, a video sequence that also includes the current image).

A (digital) image is or may be considered as a two-dimensional array or matrix including samples with intensity values. A sample in the array may also be referred to as a pixel (pixel or pel) (a short form of an image element). A quantity of samples in horizontal and vertical directions (or axes) of the array or image defines a size and/or resolution of the image. For representation of color, three color components are usually employed, to be specific, the image may be represented as or include three sample arrays. In an RBG format or color space, an image includes corresponding red, green and blue sample arrays. However, in video coding, each pixel is usually represented in a luminance/chrominance format or color space, for example, YCbCr, which includes a luminance component indicated by Y (sometimes indicated by L) and two chrominance components indicated by Cb and Cr. The luminance (luma) component Y represents brightness or gray level intensity (for example, both are the same in a gray-scale image), while the two chrominance (chrominance, chroma for short) components Cb and Cr represent chrominance or color information components. Accordingly, an image in a YCbCr format includes a luminance sample array of luminance sample values (Y), and two chrominance sample arrays of chrominance values (Cb and Cr). An image in an RGB format may be converted or transformed into a YCbCr format and vice versa. The process is also referred to as color transformation or conversion. If an image is monochrome, the image may include only a luminance sample array. Accordingly, an image may be, for example, an array of luminance samples in a monochrome format or an array of luminance samples and two corresponding arrays of chrominance samples in 4:2:0, 4:2:2, and 4:4:4 color formats.

In an embodiment, an embodiment of the video encoder 20 may include an image partitioning unit (not shown in FIG. 2) configured to partition the image 17 into a plurality of (usually non-overlapping) image blocks 203. These blocks may also be referred to as root blocks, macro blocks (H.264/AVC), or coding tree blocks (coding tree blocks, CTBs), or coding tree units (coding tree units, CTUs) in the H.265/HEVC and VVC standards. The partitioning unit may be configured to: use a same block size for all images of a video sequence and a corresponding grid defining the block size, or change a block size between images or subsets or groups of images, and partition each image into corresponding blocks.

In another embodiment, the video encoder may be configured to directly receive a block 203 of the image 17, for example, one, several, or all the blocks forming the image 17. The image block 203 may also be referred to as a current image block or a to-be-encoded image block.

Like the image 17, the image block 203 is also or may be considered as a two-dimensional array or matrix including samples with intensity values (sample values), although of a smaller dimension than the image 17. In other words, the block 203 may include one sample array (for example, a luminance array in a case of a monochrome image 17, or a luminance or chrominance array in a case of a color image), three sample arrays (for example, one luminance array and two chrominance arrays in a case of a color image 17), or any other quantity and/or type of arrays based on a used color format. Quantities of samples of the block 203 in the horizontal and vertical directions (or axes) define a size of the block 203. Accordingly, a block may be an array of M×N (M columns×N rows) samples, an array of M×N transform coefficients, or the like.

In an embodiment, the video encoder 20 shown in FIG. 2 is configured to encode the image 17 block by block, for example, encode and predict each block 203.

In an embodiment, the video encoder 20 shown in FIG. 2 may be further configured to partition and/or encode the image by using a slice (also referred to as a video slice). The image may be partitioned into or encoded by using one or more slices (typically non-overlapping). Each slice may include one or more blocks (for example, coding tree units CTU) or one or more groups of blocks (for example, tiles (tiles) in the H.265/HEVC/VVC standard and bricks (bricks) in the VVC standard).

In an embodiment, the video encoder 20 shown in FIG. 2 may be further configured to partition and/or encode the image by using slices/tile groups (also referred to as video tile groups) and/or tiles (also referred to as video tiles). The image may be partitioned into or encoded by using one or more slices/tile groups (typically non-overlapping), and each slice/tile group may include, for example, one or more blocks (for example, CTUs) or one or more tiles. Each tile may be of a rectangular shape or the like, and may include one or more complete or fractional blocks (for example, CTUs).

### Residual calculation

The residual calculation unit 204 is configured to calculate a residual block 205 based on an image block (or a raw block) 203 and a prediction block 265 (where the prediction block 265 is described in detail subsequently), for example, obtain the residual block 205 in pixel domain by subtracting a sample value of the prediction block 265 from a sample value of the image block 203 sample by sample (pixel by pixel).

### Quantification

The quantization unit 208 is configured to quantize, for example, by applying scalar quantization or vector quantization, transform coefficients 207 to obtain quantized coefficients 209. The quantized transform coefficients 209 may also be referred to as quantized residual coefficients 209.

A quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for scalar quantization, different scales may be applied to achieve finer or coarser quantization. A smaller quantization step size corresponds to finer quantization, and a larger quantization step size corresponds to coarser quantization. An appropriate quantization step size may be indicated by a quantization parameter (quantization parameter, QP). For example, the quantization parameter may be an index to a predefined set of appropriate quantization step sizes. For example, a smaller quantization parameter may correspond to finer quantization (a smaller quantization step size) and a larger quantization parameter may correspond to coarser quantization (a larger quantization step size), or vice versa. The quantization may include division by a quantization step size, and corresponding inverse quantization, for example, by the inverse quantization unit 210, may include multiplication by the quantization step size. Embodiments according to some standards such as HEVC, may be used to use a quantization parameter to determine a quantization step size. Generally, the quantization step size may be calculated based on a quantization parameter by using a fixed point approximation of an equation including division. Other scaling factors may be introduced for quantization and inverse quantization to restore a norm of a residual block, where the norm of the residual block may be modified because of a scale used in a fixed point approximation of an equation for the quantization step size and the quantization parameter. In one example implementation, scales of inverse transform and inverse quantization may be combined. Alternatively, customized quantization tables may be used and indicated from an encoder to a decoder, for example, in a bitstream. The quantization is a lossy operation, where a loss increases with increasing of the quantization step size.

In an embodiment, the video encoder 20 (correspondingly, the quantization unit 208) may be configured to output a quantization parameter (quantization parameter, QP), for example, directly output the quantization parameter or output the quantization parameter after the quantization parameter is encoded or compressed by the entropy encoding unit 270, so that, for example, the video decoder 30 can receive and use the quantization parameter for decoding.

### Inverse quantization

The inverse quantization unit 210 is configured to apply inverse quantization of the quantization unit 208 on quantized coefficients to obtain dequantized coefficients 211, for example, by applying an inverse quantization scheme of a quantization scheme applied by the quantization unit 208 based on or using a same quantization step size as the quantization unit 208. The dequantized coefficients 211 may also be referred to as dequantized residual coefficients 211 and correspond - although typically not identical to the transform coefficients due to the loss caused by quantization - to the transform coefficients 207.

### Reconstruction

The reconstruction unit 214 (for example, an adder 214) is configured to add a transform block 213 (for example, a reconstructed residual block 213) to a prediction block 265 to obtain a reconstructed block 215 in pixel domain, for example, by adding a sample value of the reconstructed residual block 213 and a sample value of the prediction block 265.

### Partitioning

The partitioning unit 262 may partition (or split) an image block (or a CTU) 203 into smaller partitions, for example, square or rectangular small blocks. For an image that has three sample arrays, a CTU includes a block of N×N luminance samples and two corresponding blocks of chrominance samples. A maximum allowed size of a luminance block in the CTU is specified to be 128×128 in the developing versatile video coding (versatile video coding, VVC) standard, but it may be specified to be a value other than 128×128 in the future, for example, 256×256. CTUs of an image may be clustered/grouped as slices/tile groups, tiles, or bricks. A tile covers a rectangular region of an image, and a tile may be partitioned into one or more bricks. A brick includes a plurality of CTU rows in a tile. A tile that is not partitioned into a plurality of bricks can be referred to as a brick. However, a brick is a true subset of a tile and is not referred to as a tile. There are two modes of tile groups supported in VVC, namely a raster-scan slice/tile group mode and a rectangular slice mode. In the raster-scan tile group mode, a slice/tile group includes a sequence of tiles in tile raster scan of an image. In the rectangular slice mode, a slice includes a plurality of bricks of an image that collectively form a rectangular region of the image. The bricks within the rectangular slice are in an order of brick raster scan of the slice. These smaller blocks (which may also be referred to as sub-blocks) may be further partitioned into even smaller partitions. This is also referred to as tree partitioning or hierarchical tree partitioning. A root block, for example, at a root tree level 0 (a hierarchy level 0, and a depth 0) may be recursively partitioned into two or more blocks at a next lower tree level, for example, nodes at a tree level 1 (a hierarchy level 1, and a depth 1). These blocks may be further partitioned into two or more blocks at a next lower level, for example, a tree level 2 (a hierarchy level 2, and a depth 2), until the partitioning is terminated (for example, because a termination criterion is fulfilled, for example, a maximum tree depth or a minimum block size is reached). Blocks which are not further partitioned are also referred to as leaf-blocks or leaf nodes of a tree. A tree partitioned into two partitions is referred to as a binary tree (binary tree, BT), a tree partitioned into three partitions is referred to as a ternary tree (ternary tree, TT), and a tree partitioned into four partitions is referred to as a quad tree (quad tree, QT).

### Entropy encoding

The entropy encoding unit 270 is configured to apply, for example, an entropy encoding algorithm or scheme (for example, a variable length coding (variable length coding, VLC) scheme, a context-adaptive VLC (context-adaptive VLC, CAVLC) scheme, an arithmetic coding scheme, a binarization algorithm, context-adaptive binary arithmetic coding (context-adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding, or another entropy encoding methodology or technique) on quantized residual coefficients 209, inter prediction parameters, intra prediction parameters, loop filter parameters, and/or other syntax elements to obtain encoded image data 21 that can be output via the output end 272, for example, in a form of an encoded bitstream 21, so that the video decoder 30 and the like can receive and use the parameters for decoding. The encoded bitstream 21 may be transmitted to the video decoder 30, or stored in a memory for later transmission or retrieval by the video decoder 30.

Another structural variation of the video encoder 20 may be used to encode a video stream. For example, a non-transform-based encoder 20 may quantize a residual signal directly without the transform processing unit 206 for some blocks or frames. In another implementation, the encoder 20 may have the quantization unit 208 and the inverse quantization unit 210 combined into a single unit.

### Decoder and decoding method

As shown in FIG. 3, the video decoder 30 is configured to receive encoded image data 21 (for example, an encoded bitstream 21), for example, encoded by the encoder 20, to obtain a decoded image 331. The encoded image data or bitstream includes information for decoding the encoded image data, for example, data that represents image blocks of an encoded video slice (and/or a tile group or a tile) and associated syntax elements.

In the example of FIG. 3, the decoder 30 includes an entropy decoding unit 304, an inverse quantization unit 310, an inverse transform processing unit 312, a reconstruction unit 314 (for example, an adder 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may perform a decoding process generally reciprocal to the encoding process described based on the video encoder 100 in FIG. 2.

As described in the encoder 20, the inverse quantization unit 210, the inverse transform processing unit 212, the reconstruction unit 214, the loop filter 220, the decoded picture buffer DPB 230, the inter prediction unit 344, and the intra prediction unit 354 further form a "built-in decoder" of the video encoder 20. Accordingly, the inverse quantization unit 310 may be identical in function to the inverse quantization unit 110, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for the respective units and functions of the video encoder 20 apply correspondingly to the respective units and functions of the video decoder 30.

### Entropy decoding

The entropy decoding unit 304 is configured to: parse a bitstream 21 (or generally, encoded image data 21), and perform entropy decoding on the encoded image data 21 to obtain quantized coefficients 309 and/or a decoded coding parameter (not shown in FIG. 3), for example, any one or all of an inter prediction parameter (for example, a reference image index and a motion vector), an intra prediction parameter (for example, an intra prediction mode or an index), a transform parameter, a quantization parameter, a loop filter parameter, and/or another syntax element. The entropy decoding unit 304 may be configured to apply a decoding algorithm or scheme corresponding to an encoding scheme of the entropy encoding unit 270 of the encoder 20. The entropy decoding unit 304 may be further configured to: provide the inter prediction parameter, the intra prediction parameter, and/or another syntax element to the mode application unit 360, and provide another parameter to another unit of the decoder 30. The video decoder 30 may receive syntax elements at a video slice level and/or a video block level. In addition or as an alternative to slices and respective syntax elements, tile groups and/or tiles and respective syntax elements may be received or used.

### Inverse quantization

The inverse quantization unit 310 may be configured to receive a quantization parameter (quantization parameter, QP) (or generally, information related to the inverse quantization) and quantized coefficients from encoded image data 21 (for example, parsed and/or decoded by the entropy decoding unit 304), and perform inverse quantization on the decoded quantized coefficients 309 based on the quantization parameter, to obtain dequantized coefficients 311. The dequantized coefficients 311 may also be referred to as transform coefficients 311. The inverse quantization process may include use of a quantization parameter obtained through calculation by the video encoder 20 for each video block in a video slice to determine a degree of quantization and, likewise, a degree of inverse quantization that should be applied.

### Reconstruction

The reconstruction unit 314 (for example, the adder 314) is configured to add a reconstructed residual block 313 to a prediction block 365 to obtain a reconstructed block 315 in pixel domain, for example, by adding a sample value of the reconstructed residual block 313 and a sample value of the prediction block 365.

Other variations of the video decoder 30 may be used to decode the encoded image data 21. For example, the decoder 30 may produce an output video stream without the loop filtering unit 320. For example, a non-transform-based decoder 30 may perform inverse quantization on a residual signal directly without the inverse transform processing unit 312 for some blocks or frames. In another implementation, the video decoder 30 may have the inverse quantization unit 310 and the inverse transform processing unit 312 combined into a single unit.

It should be understood that, in the encoder 20 and the decoder 30, a processing result of a current step may be further processed and then output to a next step. For example, after interpolation filtering, motion vector derivation, or loop filtering, a further operation, for example, a clip (clip) or shift (shift) operation, may be performed on a processing result of interpolation filtering, motion vector derivation, or loop filtering.

It should be noted that further operations may be performed on derived motion vectors of a current block (including but not limit to control point motion vectors in an affine mode, sub-block motion vectors in affine, planar, and ATMVP modes, temporal motion vectors, and the like). For example, a value of a motion vector is constrained to a predefined range based on a representing bit of the motion vector. If the representing bit of the motion vector is bitDepth, the range is from -2^(bitDepth-1) to 2^(bitDepth-1)-1, where "^" means exponentiation. For example, if bitDepth is set to 16, the range is -32768 to 32767; or if bitDepth is set to 18, the range is - 131072 to 131071. For example, values of the derived motion vectors (e.g. MVs of four 4×4 sub-blocks within one 8×8 block) are constrained such that a maximum difference between integer parts of the MVs of the four 4×4 sub-blocks is no more than N pixels, for example, no more than one pixel. Two methods for limiting the motion vector based on bitDepth are provided herein.

Although video encoding and decoding are mainly described in the foregoing embodiments, it should be noted that embodiments of the coding system 10, the encoder 20, and the decoder 30 and other embodiments described in this specification may also be used for still image processing or encoding/decoding, that is, processing or encoding/decoding of a single image independent of any preceding or consecutive images in video encoding/decoding. In general, if image processing is limited to a single image 17, the inter prediction unit 244 (the encoder) and the inter prediction unit 344 (the decoder) may not be available. All other functions (also referred to as tools or technologies) of the video encoder 20 and the video decoder 30 may also be used for still image processing, for example, residual calculation 204/304, transform 206, quantization 208, inverse quantization 210/310, (inverse) transform 212/312, partitioning 262/362, intra prediction 254/354 and/or loop filtering 220/320, entropy encoding 270, and entropy decoding 304.

Refer to FIG. 4. FIG. 4 is an example block diagram of a video coding device 400 according to an embodiment of this application. The video coding device 400 is suitable for implementing the disclosed embodiments as described herein. In an embodiment, the video coding device 400 may be a decoder like the video decoder 30 in FIG. 1a or an encoder like the video encoder 20 in FIG. 1a.

The video coding device 400 includes an ingress port 410 (or an input port 410) and a receiver unit (receiver unit, Rx) 420 that are configured to receive data; a processor, logic unit, or central processing unit (central processing unit, CPU) 430 configured to process the data, where, for example, the processor 430 may be a neural network processing unit 430; a transmitter unit (transmitter unit, Tx) 440 and an egress port 450 (or an output port 550) that are configured to transmit the data; and a memory 460 configured to store the data. The video coding device 400 may further include an optical-to-electrical (optical-to-electrical, OE) component and an electrical-to-optical (electrical-to-optical, EO) component that are coupled to the ingress port 410, the receiver unit 420, the transmitter unit 440, and the egress port 450 for egress or ingress of an optical or electrical signal.

The processor 430 is implemented by hardware and software. The processor 430 may be implemented as one or more processor chips, cores (for example, multi-core processors), FPGAs, ASICs, and DSPs. The processor 430 communicates with the ingress port 410, the receiver unit 420, the transmitter unit 440, the egress port 450, and the memory 460. The processor 430 includes a neural network-based codec 470. The neural network-based codec 470 implements embodiments disclosed above. For example, the neural network-based codec 470 performs, processes, prepares, or provides various coding operations. Therefore, the neural network-based codec 470 provides a substantial improvement to functions of the video coding device 400 and affects switching of the video coding device 400 to a different state. Alternatively, the neural network-based codec 470 is implemented according to instructions stored in the memory 460 and executed by the processor 430.

The memory 460 includes one or more disks, tape drives, and solid-state drives and may be used as an over-flow data storage device, to store programs when such programs are selected for execution, and to store instructions and data that are read during program execution. The memory 460 may be volatile and/or non-volatile, and may be a read-only memory (read-only memory, ROM), a random access memory (random access memory, RAM), a ternary content-addressable memory (ternary content-addressable memory, TCAM), and/or a static random access memory (static random access memory, SRAM).

Refer to FIG. 5. FIG. 5 is an example block diagram of an apparatus 500 according to an embodiment of this application. The apparatus 500 may be used as either or both of the source device 12 and the destination device 14 in FIG. 1a.

A processor 502 in the apparatus 500 may be a central processing unit. Alternatively, the processor 502 may be any other type of existing or to-be-developed device or a plurality of devices capable of manipulating or processing information. Although the disclosed implementations may be implemented by a single processor like the processor 502 shown in the figure, advantages in speed and efficiency can be achieved by using more than one processor.

In an implementation, a memory 504 in the apparatus 500 may be a read-only memory (ROM) device or a random access memory (RAM) device. Any other appropriate type of storage device may be used as the memory 504. The memory 504 may include code and data 506 that are accessed by the processor 502 through a bus 512. The memory 504 may further include an operating system 508 and applications 510, and the applications 510 include at least one program that permits the processor 502 to perform the method in this specification. For example, the applications 510 may include applications 1 to N, and further include a video coding application that performs the method in this specification.

The apparatus 500 may further include one or more output devices such as a display 518. In one example, the display 518 may be a touch sensitive display that combines a display with a touch sensitive element that may be configured to sense a touch input. The display 518 may be coupled to the processor 502 through the bus 512.

Although the bus 512 in the apparatus 500 is described as a single bus in this specification, the bus 512 may include a plurality of buses. Further, a secondary memory may be directly coupled to another component of the apparatus 500 or may be accessed via a network, and may include a single integrated unit like a memory card or a plurality of units such as a plurality of memory cards. Therefore, the apparatus 500 may have a variety of configurations.

### Image coding

Currently, multimedia data accounts for the majority of Internet traffic. Compression of image data plays an important role in storage and efficient transmission of the multimedia data. Therefore, the image coding technology is a very practical technology. It should be noted that Chinese translation of the English terms "image coding" and "image encoding" is usually "image coding". Image coding is generalized, and includes encoding an image into a bitstream and decoding (decoding) a bitstream into an image.

Image encoding means only encoding an image into a bitstream. Research of image coding has a long history. Researchers propose a large quantity of methods and formulate an I-frame coding method for various image and video coding standards such as JPEG, JPEG2000, JPEG-XL, JPEG-XX, WebP, H.264/AVC, H.264/HEVC, H.26/VVC, AVS3, and AV1. Most of these coding methods are based on transform, prediction, and entropy coding techniques. Although these coding methods have been widely used currently, due to an increase in a data amount of an image and emergence of new media types, a coding method with higher compression efficiency is needed.

### Deep learning-based image coding

In recent years, researchers have studied a deep learning-based image coding method. Some researchers have obtained good results. For example, Balle and others propose an end-to-end optimized image coding method. The method is better than existing best image coding, and is even better than the existing best conventional coding standard H.265/HEVC.

Deep learning-based image coding is based on a deep neural network, usually a convolutional neural network. An image coding method based on a transformer network is proposed in some research work. A structure of the deep neural network may be manually designed, or may be obtained through neural architecture search (neural architecture search, NAS). Parameters of the deep neural network are obtained according to a loss function and a back propagation algorithm.

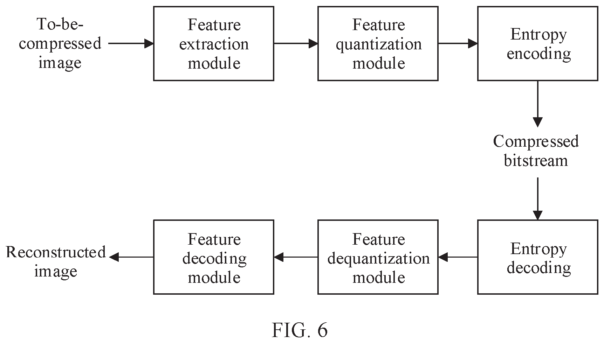

FIG. 6 shows a typical deep learning-based image compression method, which is also referred to as a neural network-based image compression method. Usually, the neural network-based image compression method includes the following parts: a feature extraction module, a feature quantization module, an entropy encoding module, an entropy decoding module, a feature dequantization module, and a feature decoding module. At an encoder side, the feature extraction module may obtain an extracted three-dimensional feature map based on a non-linear mapping activation function and through multi-layer convolution superposition. The feature quantization module quantizes floating-point feature values through eigenvalue quantization, to obtain quantized feature values. Lossless entropy encoding is performed on the quantized feature values to obtain an encoded bitstream. When the bitstream obtained through entropy-encoding is received, a decoder performs lossless entropy decoding to obtain three-dimensional quantized feature values. The feature decoding module decodes a feature into a reconstructed image, to implement decoding.

After a to-be-compressed image passes through the feature extraction module and the feature quantization module, a three-dimensional feature quantization map is obtained. When processing each feature value in the three-dimensional feature quantization map, the entropy encoding module may obtain a probability distribution of the feature value through estimation based on processed feature values in a neighborhood as context, and perform subsequent encoding based on the probability distribution to obtain an encoded bitstream.

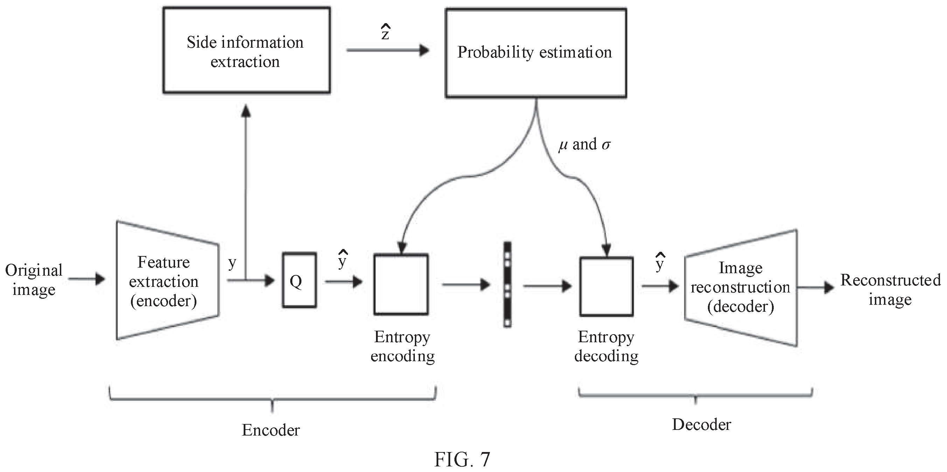

With excellent performance of deep learning in various fields, researchers propose a deep learning-based end-to-end image coding scheme. FIG. 7 shows a coding framework. The specific technical solutions are described below. At the encoder side, a raw image is input into the feature extraction module, and a feature map is output. The feature map passes through a side information extraction module, and side information is output. At the encoder side and a decoder side, the side information is input into a probability estimation module, and a probability distribution of each feature element is output to obtain a value of the to-be-encoded feature element. In addition, the feature map is input into the quantization module to obtain a quantized feature map. The entropy encoding module performs entropy encoding on each feature element in the quantized feature map based on the probability distribution of each feature element, to obtain an encoded bitstream.

At the decoder side, the decoder parses the bitstream, to output a probability distribution of a to-be-encoded symbol based on additional information, to obtain a value k of a to-be-decoded feature element. The entropy decoding module performs arithmetic decoding on each feature element in the quantized feature map based on the probability distribution of each feature element, to obtain a value of the feature element. The feature map is input into an image reconstruction module, and a reconstructed image is output.

### Neural network

The neural network may include a neuron. The neuron may be an operation unit that uses xs and an intercept 1 as inputs. An output of the operation unit may be: ${h}_{W , b} \left(x\right) = f \left({W}^{T}x\right) = f \left({\sum }_{s = 1}^{n} {W}_{s} {x}_{s} + b\right)$

Herein, s=s=1, 2, ..., n, where n is a natural number greater than 1, Ws is a weight of xs, b is a bias of the neuron, and f is an activation function (activation function) of the neuron, and is used to introduce a non-linear feature into the neural network, to convert an input signal in the neuron into an output signal. The output signal of the activation function may serve as an input of a next convolutional layer. The activation function may be a sigmoid function. The neural network is a network formed by connecting a plurality of single neurons. Specifically, an output of one neuron may be an input to another neuron. An input of each neuron may be connected to a local receptive field of a previous layer to extract a feature of the local receptive field. The local receptive field may be a region including several neurons.

### Convolutional neural network

The convolutional neural network (convolutional neural network, CNN) is a deep neural network with a convolutional structure. The convolutional neural network includes a feature extractor, and the feature extractor includes a convolutional layer and a subsampling layer. The feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. The convolutional layer usually includes several feature planes, and each feature plane may include some neurons arranged in a rectangle. Neurons of a same feature plane share a weight, and the shared weight herein is a convolution kernel. Weight sharing may be understood as that an image information extraction manner is irrelevant to a position. The convolution kernel may be initialized in a form of a random-size matrix. In a process of training the convolutional neural network, the convolution kernel may obtain an appropriate weight through learning. In addition, through weight sharing, connections between layers in the convolutional neural network are directly reduced, and an overfitting risk is lowered.

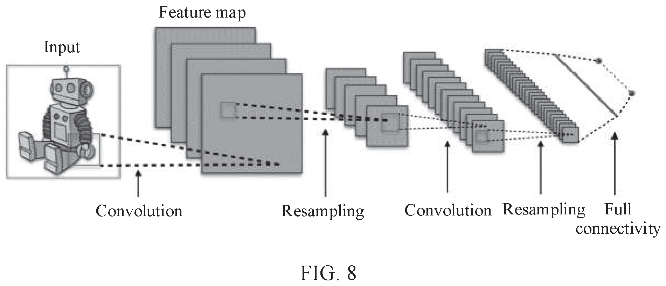

FIG. 8 schematically shows a general concept of processing by a neural network like a CNN. The convolutional neural network includes an input layer, an output layer, and a plurality of hidden layers. The input layer is a layer that provides an input (for example, a part of an image shown in FIG. 8) for processing. The hidden layers of the CNN usually include a series of convolutional layers, which are convolved with multiplication or other dot products. A result of a layer is one or more feature maps, sometimes referred to as a channel. Subsampling may be involved at some or all layers. Therefore, as shown in FIG. 8, the feature map may become smaller. An activation function of the CNN is usually a ReLU (rectified linear unit) layer, followed by additional convolution, such as a pooling layer, a fully connected layer, and a normalization layer, which are referred to as the hidden layers for inputs and outputs of the pooling layer, the fully connected layer, and the normalization layer being hidden by the activation function and final convolution. Although these layers are commonly referred to as the convolution, this is only a convention. Mathematically, the convolution is technically a sliding dot product or cross-correlation. This is important for an index of a matrix because the convolution affects how to determine a weight at a particular index point.

When a CNN used to process an image is programmed, as shown in FIG. 8, an input is a tensor having a shape of (image quantity)×(image width)×(image height)×(image depth). After passing through convolutional layers, the image is abstracted as a feature map having a shape of (image quantity)×(feature map width)×(feature map height)×(feature map channel). The convolutional layer of the neural network should have the following attributes: a convolution kernel (a hyperparameter) defined by a width and a height; quantities (hyperparameters) of input and output channels; and a depth (an input channel) of a convolutional filter being equal to a channel quantity (a depth) of an input feature map.

In the past, a conventional multi-layer perception (MLP) model has been used for image recognition. However, due to full connectivity between nodes, the nodes have high dimensions and cannot be well scaled with higher resolution images. A 1000×1000 pixel image with RGB color channels has 3 million weights, which is excessively high to be effectively processed on scale in the case of full connectivity. In addition, a data spatial structure is not considered in this network architecture, and input pixels that are far away from each other are processed in a same way as pixels that are close to each other. This ignores locality of reference in image data both computationally and semantically. Therefore, full connectivity of neurons is wasteful for a purpose like image recognition dominated by a spatial local input mode.

The convolutional neural network is a biologically inspired variant of a multi-layer perceptron, and is specifically designed to simulate behavior of visual cortex. These models alleviate challenges brought by an MLP architecture by utilizing strong spatial local correlations in natural images. The convolutional layer is a core construction block of the CNN. A parameter of the layer includes a set of learnable filters (the foregoing kernels) that have small receptive fields but extend to an entire depth of an input size. During forward passage, each filter performs convolution on a width and a height of the input size, calculates a dot product between an entry and an input of the filter, and generates a two-dimensional activation map of the filter. Therefore, a network learning filter is activated when detecting a specific type of feature at a specific spatial position in the input.

Activation maps of all filters are stacked along a depth dimension to form a complete output size of the convolutional layer. Therefore, each entry in the output size may also be interpreted as an output of a neuron that observes a small region in an input and shares a parameter with a neuron in a same activation map. A feature map or an activation map is an output activation of a given filter. The feature map and the activation have a same meaning. In some papers, the activation is referred to as the activation map due to the activation being mapping corresponding to activations of different parts of an image, and is also the feature map due to the activation being mapping for discovering a feature in the image. High activation means that a function is found.

Another important concept of a cellular neural network is pooling, which is a form of non-linear downsampling. There are several non-linear functions that can implement pooling, where maximum pooling is most common. Maximum pooling divides an input image into a group of non-overlapping rectangles and outputs a maximum value for each of these sub-regions.

Intuitively, in comparison with another feature, an exact position of a feature is less important than a rough position of the feature. This is an idea of using pooling in a convolutional neural network. The pooling layer is used to gradually reduce a size of represented space, reduce a quantity of parameters, memory usage, and a calculation amount that are in the network, and therefore control overfitting. In a CNN architecture, it is common to periodically insert pooling layers between consecutive convolutional layers. A pooling operation provides another form of translation invariance.

The pooling layer independently operates each depth slice of an input and adjusts a size of the depth slice in space. A most common form is a pooling layer with a filter whose size is 2×2 that applies 2 downsampling steps along a width and a height on each depth slice of the input and discards 75% activations. In this case, each maximum operation exceeds 4 digits. A depth size remains unchanged.

In addition to maximum pooling, a pool unit may alternatively use another function, for example, average pooling or L2-norm pooling. Average pooling has been used frequently in history. However, average pooling has been recently used less compared to maximum pooling, and performance of maximum pooling is better in practice. Due to significant reduction in a representation size, there has been a recent trend to use smaller filters or discard the pooling layer entirely. "Region of interest" pooling (also referred to as ROI pooling) is a variant of maximum pooling, with a fixed output size and an input rectangle being a parameter. Pooling is an important part of a convolutional neural network for object detection based on a fast R-CNN architecture.

A ReLU is short for a rectified linear unit that uses a non-saturated activation function. By setting a negative value to zero, the ReLU can effectively remove the negative value from activation mapping. The ReLU increases non-linear features for a decision-making function and the whole network without affecting a receptive field of a convolutional layer. Other functions are also used to increase non-linearity, such as a saturated hyperbolic tangent function and an S-shaped function. The ReLU is often more popular than another function because the ReLU trains a neural network several times faster without significantly affecting generalization accuracy.

After several convolutional layers and a maximum pooling layer, advanced inference in the neural network is completed by the fully connected layer. Neurons at the fully connected layer are connected to all activations at a previous layer, as seen in a regular (non-convolutional) artificial neural network. Therefore, activations of the neurons at the fully connected layer may be calculated as an affine transformation: matrix multiplication followed by a bias (addition of vectors of learned or fixed bias terms).

A "loss layer" specifies training a way to punish a deviation between prediction (an output) and an actual label, and is usually a last layer of the neural network. Various loss functions suitable for different tasks may be used. A Softmax loss function is used to predict a single class in K mutually exclusive classes. A Sigmoid cross entropy loss function is used to predict K independent probability values in [0, 1]. A Euclidean loss function is used to return to an actual-value label.

In conclusion, FIG. 8 shows a data flow in a typical convolutional neural network. First, an input image passes through a convolutional layer and is abstracted as a feature map including several channels that correspond to a quantity of filters in a group of learnable filters (for example, one channel per filter) at the layer. Then, the feature map is subsampled by, for example, the pooling layer. This reduces a quantity of dimensions of each channel of the feature map. Subsequent data enters another convolutional layer, and the layer may have different quantities of output channels, resulting in different quantities of channels of the feature map. As described above, quantities of input and output channels are hyperparameters of the layer. To establish network connectivity, these parameters need to be synchronized between two connected layers. For example, a quantity of input channels of a current layer should be equal to a quantity of output channels of a previous layer. For a first layer for processing input data (for example, an image), a quantity of input channels is usually equal to a quantity of channels represented by the data, for example, three channels represented by RGB or YUV for an image or a video, or one channel represented by a gray-scale image or video.

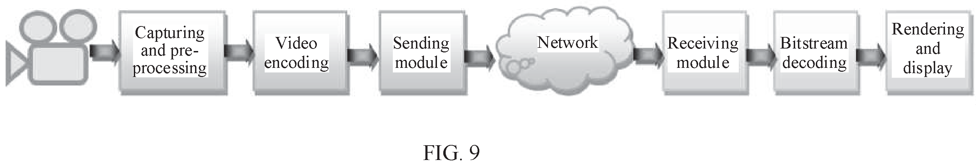

The method provided in embodiments of this application is applied to a video codec, for example, a video codec in a video communication system. As shown in FIG. 9, after a video capturing device is used to capture a video, a series of pre-processing is performed on the video, and then compression and encoding are performed on the processed video, to obtain an encoded bitstream. A sending module is used to send the bitstream to a receiving module via a transmission network. After being decoded by a decoder, the bitstream may be rendered and displayed. In addition, the bitstream obtained through video encoding may also be directly stored.

An embodiment of this application describes an enhancement layer-oriented neural network-based encoding and decoding scheme, and an application scenario of the solution may be a layered coding solution.

The method provided in embodiments of this application may be applied to an apparatus or a product including a video encoder function and/or a video decoder function, for example, a video processing software and hardware product like a chip, and a product or an apparatus including such a chip, for example, a media product like a mobile phone.

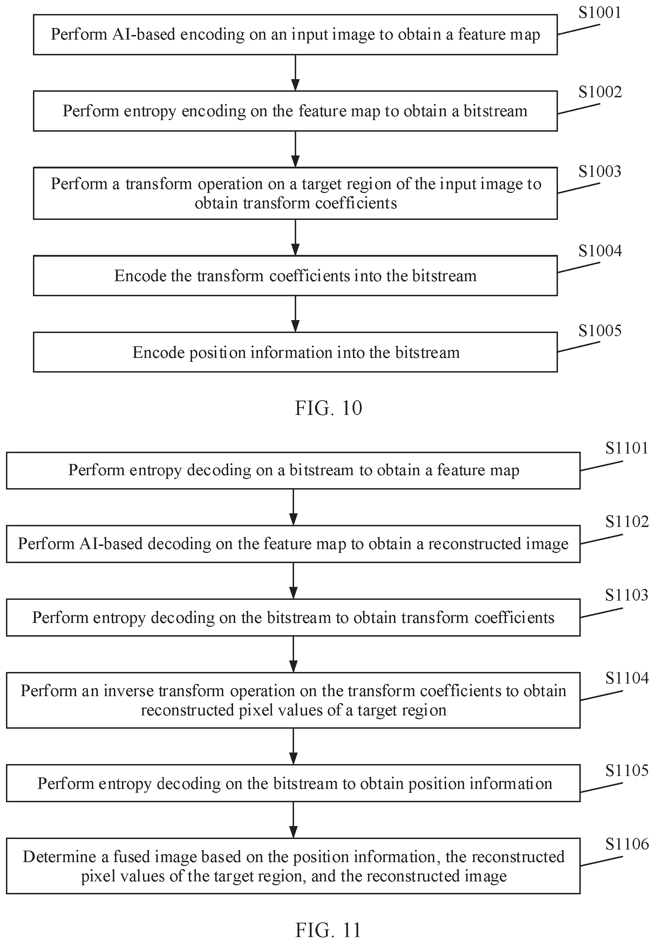

FIG. 10 shows a flowchart of an encoding method according to an embodiment of this application. As shown in FIG. 10, the encoding method provided in embodiments of this application includes the following steps.

S1001: Perform AI-based encoding on an input image to obtain a feature map.

AI-based encoding may be performed by any AI encoder.

For example, the input image may be input into a JPEG AI encoder for AI-based encoding to obtain the feature map.

S1002: Perform entropy encoding on the feature map to obtain a bitstream.

For example, entropy encoding may be performed on the feature map according to an asymmetric numeral system (asymmetric numeral system, ANS) algorithm to obtain the bitstream.

S1003: Perform a transform operation on a target region of the input image to obtain transform coefficients.

In a possible implementation, the transform coefficients may be residuals.

In a possible implementation, one or more regions of the input image may be selected as the target region.

For example, one or more regions of the input image may be selected as the target region based on image distortion (image distortion degree) of the regions.

For example, a region that is in the input image and whose image distortion (image distortion degree) is greater than an image distortion threshold may be used as the target region.

For another example, one or more regions of interest of human eyes of the input image may be selected as the target region.

For another example, one or more regions of the input image may be randomly selected as the target region.

In a possible implementation, the transform operation includes at least one of DCT, DFT, or DWT.

For example, DCT transform may be performed on the target region of the input image.

In a possible implementation, the target region may be divided into a plurality of image blocks, and the transform operation is performed on the plurality of image blocks.

For example, the target region may be divided into the plurality of image blocks at an H×W granularity, and the transform operation is performed on the plurality of image blocks. Herein, H is a positive integer, W is a positive integer, and H and W may be the same.

For example, the target region may be divided into the plurality of image blocks based on a binary mask image at an 8×8 granularity, and a DCT operation is performed on the plurality of image blocks.

The binary mask image indicates all 8×8 image blocks on which DCT transform needs to be performed in the raw image, and an 8×8 block corresponding to a point whose value is 1 in the mask image indicates an image block on which DCT transform needs to be performed.

S1004: Encode the transform coefficients into the bitstream.

In a possible implementation, the transform coefficients may be quantized, and quantized transform coefficients may be encoded into the bitstream.

In a possible implementation, the transform coefficients may be entropy encoded into the bitstream.

For example, direct current transform coefficients and alternating current transform coefficients of the input image may be separately encoded. An N×N block is transformed to obtain N×N transform coefficients, a transform coefficient at a (0,0) position is a direct current transform coefficient, and transform coefficients at other positions are alternating current transform coefficients.

For example, differential encoding may be performed on the direct current transform coefficients of the input image, that is, a difference between a direct current component of each block and a direct current component of a previous block is encoded. Differences are divided into a plurality of groups based on amplitudes of the differences. Entropy encoding is performed on a group number of each group according to a tabled asymmetric numeral system (tabled asymmetric numeral system, tANS) algorithm, and amplitudes in each group are encoded by using a fixed-length code.

For example, differential encoding may be performed on the direct current transform coefficients of the input image based on a table shown in Table 1. Table 1 shows group numbers, value ranges corresponding to groups, and quantities of bits required by values. When encoding is performed on the group numbers according to the tANS, statistics are first collected on probabilities P0 to P11 of group numbers, and 8-bit unsigned integers are used to represent probability values. The probabilities are written into the bitstream. At the same time, the group numbers are entropy encoded based on the probabilities P0 to P11, for being written into the bitstream.

**Table 1**

| Group number | Value range | Quantity of bits required by the amplitude |
|---|---|---|
| 0 | 0 | - |
| 1 | -1, 1 | 1 |
| 2 | -3, -2, 2, -3 | 2 |
| 3 | -7, ..., -4, 4, ..., 7 | 3 |
| 4 | -15, ..., -8, 8, ..., -15 | 4 |
| 5 | -31, ..., -16, 16, ..., 31 | 5 |
| 6 | -63, ..., -32, 32, ..., 63 | 6 |
| 7 | -127, ..., -64, 64, ..., 127 | 7 |
| 8 | -255, ..., -128, 128, 255 | 8 |
| 9 | -511, ...., -256, 256, ..., 511 | 9 |
| 10 | -1023, ..., -512, 512, ..., 1023 | 10 |
| 11 | -2047, ..., -1024, 1024, ..., 2047 | 11 |

For example, run-length encoding may be performed on the alternating current transform coefficients of the input image. A coding scheme of non-zero coefficients may be the same as a coding scheme of differential amplitudes of the direct current transform coefficients.

Run-length encoding indicates that a quantity R of zeros between a current non-zero coefficient and a previous non-zero coefficient is encoded, and a maximum quantity is 15. Then, the current non-zero coefficient S is encoded. If the quantity of zeros is greater than 15, (15, 0) is encoded. When R is 16, it indicates that all alternating current transform coefficients from a current position to a last position are 0. Entropy encoding performed on the quantity R of consecutive zeros and a group number of a coefficient S according to the tANS includes: collecting statistics on probabilities Pr of R taking different values from 0 to 16, and writing a 1×17 probability vector indicated by 17 8-bit unsigned integers into a bitstream; collecting statistics on probabilities Ps of the group number of S taking different values from 0 to 11, and writing a 1×12 probability vector indicated by 12 8-bit unsigned integers into the bitstream; and performing, based on Pr and Ps, entropy encoding on R and the group number of the coefficient S according to the ANS. An amplitude of the coefficient S is indicated by using a quantity of bits in a group to which the amplitude belongs, and is written into the bitstream.

For example, run-length encoding may be performed on the alternating current transform coefficients of the input image based on a table shown in Table 2. Table 2 shows group numbers, value ranges corresponding to groups, and quantities of bits required by values.

**Table 2**

| Group number | Value range | Quantity of bits required by the amplitude |
|---|---|---|
| 0 | 0 | - |
| 1 | -1, 1 | 1 |
| 2 | -3, -2, 2, -3 | 2 |
| 3 | -7, ..., -4, 4, ..., 7 | 3 |
| 4 | -15, ..., -8, 8, ..., -15 | 4 |
| 5 | -31, ..., -16, 16, ..., 31 | 5 |
| 6 | -63, ..., -32, 32, ..., 63 | 6 |
| 7 | -127, ..., -64, 64, ..., 127 | 7 |
| 8 | -255, ..., -128, 128, 255 | 8 |
| 9 | -511, ...., -256, 256, ..., 511 | 9 |
| 10 | -1023, ..., -512, 512, ..., 1023 | 10 |
| 11 | -2047, ..., -1024, 1024, ..., 2047 | 11 |

S1005: Encode position information into the bitstream.

The position information indicates a position of the target region in the input image.

In a possible implementation, the position information may be mask image information (for example, a binary mask image). The mask image information includes a first region, and the first region indicates the target region. For example, the mask image may include 0 and 1, and a region in which 1 is located is the target region.

In a possible implementation, the position information may be entropy encoded into the bitstream.

For example, an H×W image is divided into 8×8 blocks, and a height of an obtained binary mask image is ((H+7)>>3), and a width is ((W+7)>>3). The mask image is converted into a 1-dimensional 01 vector through raster scanning, and then entropy encoding is performed on the 01 vector generated based on the mask image to write the 01 vector into the bitstream.

For example, entropy encoding may be performed, based on a run-length coding (run-length coding) method, on the 01 vector generated based on the mask image. An 8-bit (bit) unsigned number indicates a quantity of zeros before a non-zero value 1. A bitstream is generated based on a 01 string formed by the quantity of zeros that occupies 8 bits and 0/1 that occupies 1 bit (when the quantity of zeros is greater than 255, 255 is binarized and written into the bitstream, and a 256^{th} 0 is written into the bitstream).

For another example, entropy encoding may be performed on the 01 vector according to the ANS, and statistics are collected on a frequency P of appearance of 0 in the 01 vector. The frequency is used as a probability of 0, and the probability P is represented by using an 8-bit integer A, and is written into the bitstream. A probability of appearance of 1 is (256-A)/256. Based on the probability P, entropy encoding is performed on the 01 vector according to the ANS.

According to the method provided in embodiments of this application, quality enhancement is additionally performed on a partial region of an image according to a conventional encoding scheme, to compensate for a disadvantage of significant local distortion in image quality caused by limitations in AI-based encoding network capacity and generalization. In comparison with performing pure AI-based encoding on the input image, in this case, additionally performing quality enhancement on the partial region of the image according to the conventional encoding scheme can improve overall image quality of AI-based image encoding.

In a possible implementation, a transform parameter may be encoded (entropy encoded) into the bitstream. The transform parameter is a transform parameter used in the foregoing transform operation.

FIG. 11 shows a flowchart of an encoding method according to an embodiment of this application. As shown in FIG. 11, the encoding method provided in embodiments of this application includes the following steps.

S1101: Perform entropy decoding on a bitstream to obtain a feature map.

For example, entropy decoding may be performed on the bitstream according to an ANS to obtain the feature map.

S1102: Perform AI-based decoding on the feature map to obtain a reconstructed image.

AI-based decoding may be performed by any AI decoder.

For example, the feature map may be input into a JPEG AI decoder for AI-based decoding to obtain the reconstructed image.

S1103: Perform entropy decoding on the bitstream to obtain transform coefficients.

For example, entropy decoding may be separately performed on direct current transform coefficients and alternating current transform coefficients in the bitstream.

For example, for direct current coefficient decoding, probabilities P0 to P11 of direct current differential values in groups may be obtained by decoding the bitstream, and a value grouping situation is shown in Table 1. Entropy decoding is performed on group numbers according to a tANS based on the probabilities P0 to P11, a group number of a current direct current difference value is obtained from the bitstream, and a corresponding bit is read from the bitstream based on a quantity of bits required by values in the group number, to obtain a differential value, where the differential value and a direct current component of a previous block are summed to obtain a current direct current coefficient value. Direct current coefficients of all DCT blocks are obtained based on the process.

For another example, for alternating current coefficient decoding, probabilities Pr of a quantity R of zeros between adjacent non-zero coefficients, where R ranges from 0 to 16, may be obtained by decoding the bitstream, where a 1×17 probability vector is indicated by 17 8-bit unsigned integers; probabilities Ps of values of alternating current coefficients S belonging to groups with different group numbers ranging from 0 to 11 are obtained by decoding the bitstream, where a 1×12 probability vector is indicated by 12 8-bit unsigned integers; and R is obtained by performing, based on Pr, entropy decoding on the bitstream according to an ANS. When R is 16, all alternating current coefficients from a current position to a 63^{rd} position are 0; otherwise, a group number of a coefficient S is obtained by performing, based on Ps, entropy decoding on the bitstream according to the ANS, a quantity of bits required by an amplitude of the coefficient S is obtained based on a group to which the coefficient S belongs, the corresponding bit is read from the bitstream, a value of the alternating current coefficient S is obtained, and R positions before the current coefficient S are filled with 0. Alternating current coefficients of all DCT blocks are obtained based on the process.

In a possible implementation, entropy decoding may be performed on the bitstream to obtain quantized transform coefficients, and inverse quantization may be performed on the quantized transform coefficients.

S1104: Perform an inverse transform operation on the transform coefficients to obtain reconstructed pixel values of a target region.

S1105: Perform entropy decoding on the bitstream to obtain position information.

The position information indicates a position of the target region, and the transform coefficients are coefficients used to perform a transform operation on the target region.

In a possible implementation, entropy decoding may be performed on the bitstream to obtain a binary mask image that indicates the position information.

For example, an H×W image is divided into 8×8 blocks, and a height of an obtained binary mask image is ((H+7)>>3), and a width is ((W+7)>>3). The mask image is converted into a 1-dimensional 01 vector through raster scanning.

For example, the 01 vector is decoded based on a run-length coding method. An 8-bit unsigned number indicates a quantity of zeros before a non-zero value 1. A 01 string is generated from the bitstream in an order of (the quantity of zeros that occupies 8 bits and 0/1 that occupies 1 bit) to obtain the quantity of zeros and a 0/1 value. In this way, the entire binary mask image is obtained.

For another example, entropy decoding is performed on the 01 vector according to the ANS. The bitstream is decoded to obtain a frequency P of appearance of 0 in the 01 vector, where the probability P is indicated by an 8-bit integer A. A probability of appearance of 1 is (256-A)/256. Based on the probability P, entropy decoding is performed on the 01 vector according to the ANS, to obtain the binary mask image.

S1106: Determine a fused image based on the position information, the reconstructed pixel values of the target region, and the reconstructed image.

In a possible implementation, the target region in the reconstructed image may be determined based on the position information; and pixel values of the target region in the reconstructed image is updated based on the reconstructed pixel values, to obtain the fused image.

For example, a region corresponding to an enhancement layer image block in the reconstructed image may be determined based on the binary mask image, and pixel values of the region corresponding to the enhancement layer image block in the reconstructed image are set to the reconstructed pixel values of the target region in the reconstructed image.

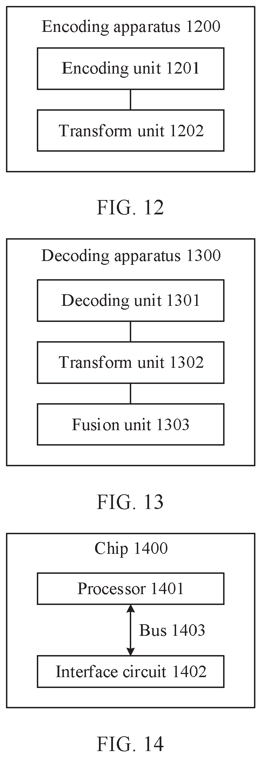

The following describes, with reference to FIG. 12, an encoding apparatus configured to perform the foregoing encoding method.

It may be understood that, to implement the foregoing function, the encoding apparatus includes a corresponding hardware and/or software module for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, the encoding apparatus may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

When each functional module is obtained through division based on each corresponding function, FIG. 12 is a diagram of possible composition of the encoding apparatus in the foregoing embodiments. The apparatus may be an electronic device, or may be a module (for example, a processor, a chip, or a chip system) used in the electronic device, or may be a logical node, a logical module, or software that can implement all or a part of functions of the electronic device. As shown in FIG. 12, the encoding apparatus 1200 may include an encoding unit 1201 and a transform unit 1202.

The encoding unit 1201 is configured to perform AI-based encoding on an input image to obtain a feature map.

The encoding unit 1201 is further configured to perform entropy encoding on the feature map to obtain a bitstream.

The transform unit 1202 is configured to perform a transform operation on a target region of the input image to obtain transform coefficients.

The encoding unit 1201 is further configured to encode the transform coefficients into the bitstream.

The encoding unit 1201 is further configured to encode position information into the bitstream, where the position information indicates a position of the target region in the input image.

In a possible implementation, the transform unit 1202 is specifically configured to: divide the target region into a plurality of image blocks; and perform the transform operation on the plurality of image blocks to obtain the transform coefficients.

In a possible implementation, the encoding unit 1201 is specifically configured to: quantize the transform coefficients; and encode the quantized transform coefficients into the bitstream.

The following describes, with reference to FIG. 13, a decoding apparatus configured to perform the foregoing decoding method.

It may be understood that, to implement the foregoing function, the decoding apparatus includes a corresponding hardware and/or software module for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, the decoding apparatus may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

When each functional module is obtained through division based on each corresponding function, FIG. 13 is a diagram of possible composition of the decoding apparatus in the foregoing embodiments. The apparatus may be an electronic device, or may be a module (for example, a processor, a chip, or a chip system) used in the electronic device, or may be a logical node, a logical module, or software that can implement all or a part of functions of the electronic device. As shown in FIG. 13, the decoding apparatus 1300 may include a decoding unit 1301, a transform unit 1302, and a fusion unit 1303.

The decoding unit 1301 is configured to perform entropy decoding on a bitstream to obtain a feature map.

The decoding unit 1301 is further configured to perform AI-based decoding on the feature map to obtain a reconstructed image.

The decoding unit 1301 is further configured to perform entropy decoding on the bitstream to obtain transform coefficients.

The transform unit 1302 is configured to perform an inverse transform operation on the transform coefficients to obtain reconstructed pixel values of a target region.

The decoding unit 1301 is further configured to perform entropy decoding on the bitstream to obtain position information, where the position information indicates a position of the target region.

The fusion unit 1303 is configured to determine a fused image based on the position information, the reconstructed pixel values of the target region, and the reconstructed image.

In a possible implementation, the fusion unit 1303 is specifically configured to: determine the target region in the reconstructed image based on the position information; and update pixel values of the target region in the reconstructed image based on the reconstructed pixel values, to obtain the fused image.

In a possible implementation, the decoding unit 1301 is specifically configured to: perform entropy decoding on the bitstream to obtain quantized transform coefficients; and perform inverse quantization on the quantized transform coefficients to obtain the transform coefficients.

An embodiment of this application further provides a chip. The chip may be a chip of the foregoing encoding apparatus or decoding apparatus. FIG. 14 is a diagram of a structure of a chip 1400. The chip 1400 includes one or more processors 1401 and an interface circuit 1402. Optionally, the chip 1400 may further include a bus 1403.

The processor 1401 may be an integrated circuit chip and has a signal processing capability. In an implementation process, the steps of the encoding and decoding methods may be implemented by using an integrated logic circuit of hardware in the processor 1401, or by using instructions in a form of software.

Optionally, the processor 1401 may be a general-purpose processor, a digital signal processor (digital signal processor, DSP), an integrated circuit (application-specific integrated circuit, ASIC), a field-programmable gate array (field-programmable gate array, FPGA) or another programmable logic device, a discrete gate or a transistor logic device, or a discrete hardware component. The processor 1401 may implement or perform the methods and steps that are disclosed in embodiments of this application. The general-purpose processor may be a microprocessor, or the processor may be any conventional processor or the like.

The interface circuit 1402 may be configured to send or receive data, instructions, or information. The processor 1401 may perform processing by using data, instructions, or other information received by the interface circuit 1402, and may send processed information through the interface circuit 1402.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking the operation instructions stored in the memory (the operation instructions may be stored in an operating system).

Optionally, the chip may be used in the encoding apparatus or the decoding apparatus in embodiments of this application. Optionally, the interface circuit 1402 may be configured to output an execution result of the processor 1401. For the encoding and decoding methods provided in one or more of embodiments of this application, refer to the foregoing embodiments. Details are not described herein again.

It should be noted that functions respectively corresponding to the processor 1401 and the interface circuit 1402 may be implemented by using a hardware design, may be implemented by using a software design, or may be implemented in a combination of software and hardware. This is not limited herein.

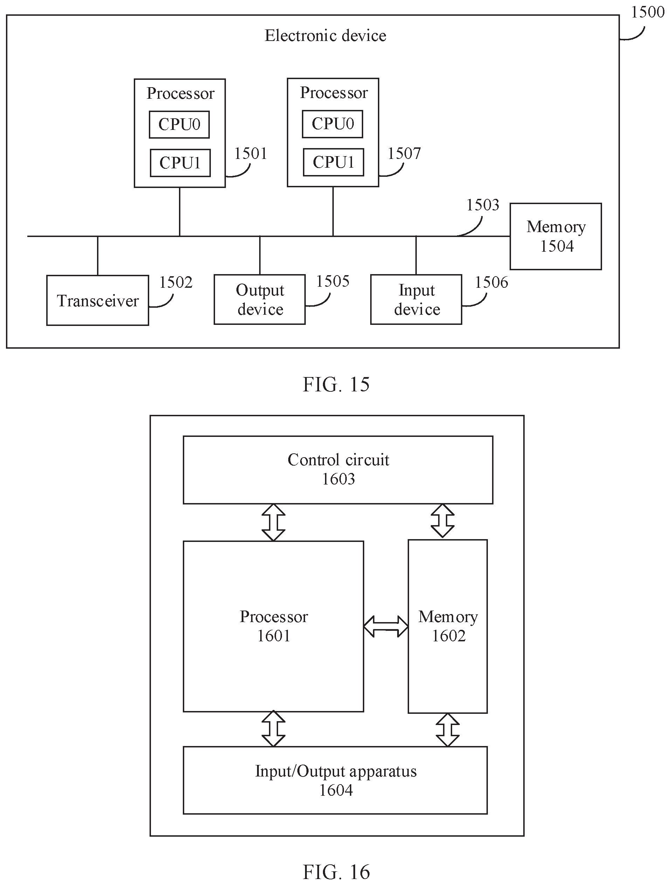

FIG. 15 is a diagram of a structure of an electronic device according to an embodiment of this application. The electronic device may be an encoding apparatus or a decoding apparatus, a chip or a functional module in the encoding apparatus, or a chip or a functional module in the decoding apparatus. As shown in FIG. 15, the electronic device 1500 includes a processor 1501, a transceiver 1502, and a communication line 1503.

The processor 1501 is configured to perform any step in the encoding and decoding methods provided in embodiments of this application, and in the process of performing any step in the encoding and decoding methods provided in embodiments of this application, the processor 1501 may choose to invoke the transceiver 1502 and the communication line 1503 to complete a corresponding operation.

Further, the electronic device 1500 may further include a memory 1504. The processor 1501, the memory 1504, and the transceiver 1502 may be connected to each other through the communication line 1503.

The processor 1501 is a processor, a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1501 may be another apparatus with a processing function, for example, a circuit, a component, or a software module. This is not limited.

The transceiver 1502 is configured to communicate with another device or another communication network. The another communication network may be an Ethernet, a radio access network (radio access network, RAN), a wireless local area network (wireless local area network, WLAN), or the like. The transceiver 1502 may be a module, a circuit, a transceiver, or any apparatus that can implement communication.

The transceiver 1502 is mainly configured to: receive and send commands, information, and the like, and may include a transmitter and a receiver that separately send and receive the commands, the information, and the like. An operation other than receiving and sending the commands, the information, and the like is implemented by the processor.

The communication line 1503 is configured to transmit information between components included in the electronic device 1500.

In a design, the processor may be considered as a logic circuit, and the transceiver may be considered as an interface circuit.

The memory 1504 is configured to store instructions. The instructions may be a computer program.

The memory 1504 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 1504 may alternatively be a compact disc read-only memory (compact disc read-only memory, CD-ROM) or another compact disc storage, an optical disk storage (including a compact disc, a laser disc, an optical disc, a digital versatile disc, a Blu-ray disc, and the like), a magnetic disk storage medium, another magnetic storage device, or the like. It should be noted that the memory of the systems and methods described in this specification includes but is not limited to these and any memory of another appropriate type.

It should be noted that the memory 1504 may be independent of the processor 1501, or may be integrated with the processor 1501. The memory 1504 may be configured to store instructions, program code, some data, or the like. The memory 1504 may be located inside or outside the electronic device 1500. This is not limited. The processor 1501 is configured to execute the instructions stored in the memory 1504, to implement the method provided in the foregoing embodiments of this application.

In an example, the processor 1501 may include one or more processors, for example, a processor 0 and a processor 1 in FIG. 15.

In an optional implementation, the electronic device 1500 includes a plurality of processors. For example, in addition to the processor 1501 in FIG. 15, the electronic device 1500 may include a processor 1509.

In an optional implementation, the electronic device 1500 further includes an output device 1505 and an input device 1506. For example, the input device 1506 is a device, for example, a keyboard, a mouse, a microphone, or a joystick, and the output device 1505 is a device, for example, a display or a speaker (speaker).

It should be noted that the electronic device 1500 may be a chip system or a device having a structure similar to that in FIG. 15. The chip system may include a chip, or may include a chip and another discrete device. Actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited. In addition, a composition structure shown in FIG. 15 does not constitute a limitation on the electronic device 1500. In addition to the components shown in FIG. 15, the electronic device 1500 may include more or fewer components than those shown in FIG. 15, or some components may be combined, or different component arrangements may be used.

The processor and the transceiver that are described in this application may be implemented on an integrated circuit (integrated circuit, IC), an analog IC, a radio frequency integrated circuit, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

FIG. 16 is a diagram of a structure of another electronic device according to an embodiment of this application. The electronic device may be an encoding apparatus or a decoding apparatus, a chip or a functional module in the encoding apparatus, or a chip or a functional module in the decoding apparatus. For ease of description, FIG. 16 shows only main components of the electronic device, including a processor 1601, a memory 1602, a control circuit 1603, and an input/output apparatus 1604. The processor 1601 is mainly configured to: process a communication protocol and communication data, execute a software program, and process data of the software program. The memory 1602 is mainly configured to store the software program and data. The control circuit 1603 is mainly configured to: supply power and transmit various electrical signals. The input/output apparatus 1604 is mainly configured to: receive data input by a user, and output data to the user.

When the electronic device is the processor 1601, the control circuit 1603 may be a main board. The memory 1602 includes a medium having a storage function, for example, a hard disk, a RAM, or a ROM. The processor 1601 may include a baseband processor 1601 and a central processing unit. The baseband processor is mainly configured to process a communication protocol and communication data. The central processing unit is mainly configured to: control the entire electronic device, execute the software program, and process the data of the software program. The input/output apparatus 1604 includes a display, a keyboard, a mouse, and the like. The control circuit 1603 may further include or be connected to a transceiver circuit or a transceiver, for example, a network cable interface, configured to send or receive data or a signal, for example, perform data transmission and communication with another device. Further, the control circuit may further include an antenna, configured to: receive and send a radio signal, and configured to perform data/signal transmission with another device.

An embodiment of this application further provides an encoding apparatus. The apparatus includes at least one processor. When the at least one processor executes program code or instructions, the foregoing related method steps are implemented to implement the encoding method in the foregoing embodiments.

Optionally, the apparatus may further include at least one memory, and the at least one memory is configured to store the program code or the instructions.

An embodiment of this application further provides a decoding apparatus. The apparatus includes at least one processor. When the at least one processor executes program code or instructions, the foregoing related method steps are implemented to implement the decoding method in the foregoing embodiments.

Optionally, the apparatus may further include at least one memory, and the at least one memory is configured to store the program code or the instructions.

An embodiment of this application further provides a computer storage medium. The computer storage medium stores computer instructions. When the computer instructions are run on a communication apparatus, the communication apparatus is enabled to perform the foregoing related method steps to implement the encoding and decoding methods in the foregoing embodiments.

An embodiment of this application further provides a computer program product. When the computer program product runs on a computer, the computer is enabled to perform the foregoing related steps to implement the encoding and decoding methods in the foregoing embodiments.

An embodiment of this application further provides an encoding apparatus. The apparatus may be specifically a chip, an integrated circuit, a component, or a module. Specifically, the apparatus may include a memory configured to store instructions and a processor that are connected, or the apparatus includes at least one processor, configured to obtain instructions from an external memory. When the apparatus is run, the processor may execute the instructions, so that the chip performs the encoding method in the foregoing method embodiments.

An embodiment of this application further provides a decoding apparatus. The apparatus may be specifically a chip, an integrated circuit, a component, or a module. Specifically, the apparatus may include a memory configured to store instructions and a processor that are connected, or the apparatus includes at least one processor, configured to obtain instructions from an external memory. When the apparatus is run, the processor may execute the instructions, so that the chip performs the decoding method in the foregoing method embodiments.

An embodiment of this application further provides a bitstream storage method. The method includes: obtaining and storing a bitstream obtained based on the encoding and decoding methods.

An embodiment of this application further provides a bitstream storage apparatus. The apparatus is configured to: obtain and store a bitstream obtained based on the encoding and decoding methods.

An embodiment of this application further provides a bitstream transmission method. The method includes: obtaining and transmitting a bitstream obtained based on the encoding and decoding methods.

An embodiment of this application further provides a bitstream transmission apparatus. The apparatus is configured to: obtain and transmit a bitstream obtained based on the encoding and decoding methods.

An embodiment of this application further provides a computer-readable storage medium. The computer-readable storage medium stores a bitstream obtained based on the encoding and decoding methods.

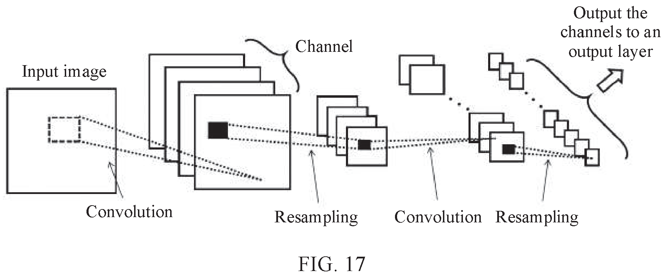

Refer to FIG. 17. FIG. 17 schematically illustrates a general concept of processing via a neural network like a convolutional neural network (convolutional neural network, CNN). The convolutional neural network includes an input layer, an output layer, and a plurality of hidden layers. The input layer is a layer that provides an input (for example, a part of an input image shown in FIG. 17) for processing. The hidden layers of the CNN usually include a series of convolutional layers, which are convolved with multiplication or other dot products. A result of a layer is one or more feature maps (represented by empty rectangles constituted by solid lines), sometimes referred to as a channel. Resampling (such as subsampling) may be involved at some or all layers. Therefore, the feature map may become smaller, as shown in FIG. 17. It is noted that convolution with a stride can also reduce a size of the input feature map (resampling). An activation function of the CNN is usually a ReLU (rectified linear unit) layer, followed by additional convolution, such as a pooling layer, a fully connected layer, and a normalization layer, which are referred to as the hidden layers for inputs and outputs of the pooling layer, the fully connected layer, and the normalization layer being hidden by the activation function and final convolution. Although these layers are commonly referred to as the convolution, this is only a convention. Mathematically, the convolution is technically a sliding dot product or cross-correlation. This is important for an index of a matrix because the convolution affects how to determine a weight at a particular index point.

When a CNN is programmed for image processing, as shown in FIG. 17, an input is a tensor having a shape of (image quantity)×(image width)×(image height)×(image depth). It should be known that the image depth may include a channel of the image. After passing through the convolutional layers, the image is abstracted as a feature map having a shape of (image quantity)×(feature map width)×(feature map height)×(feature map channel). The convolutional layer of the neural network should have the following attributes: a convolution kernel (a hyperparameter) defined by a width and a height; quantities (hyperparameters) of input and output channels; and a depth (an input channel) of a convolutional filter being equal to a channel quantity (a depth) of an input feature map.

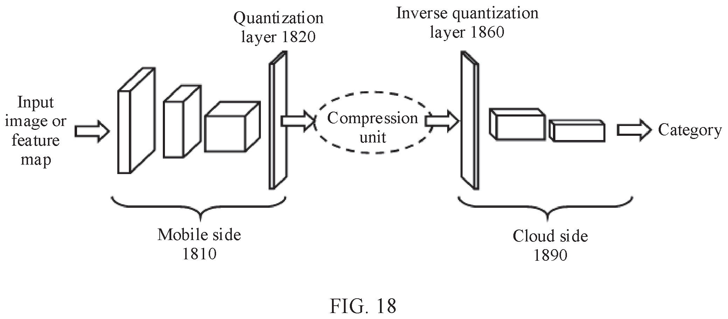

Video coding for machine (VCM) is another popular direction of computer science. A main idea for this method is transmitting a coded representation of image or video information for further processing by a computer vision (CV) algorithm, such as object segmentation, detection, and recognition. Compared with conventional image and video coding that targets human perception, quality features, for example, object detection precision instead of reconstruction quality, are performance of a computer vision task. As shown in FIG. 18,
the video coding for machine, also known as collaborative intelligence, is a new paradigm for efficiently deploying deep neural networks in mobile cloud infrastructure. Network division is performed between a mobile side 1810 and a cloud side 1890 (for example, a cloud server), to allocate computing workload to minimize total energy and/or a delay of a system. In general, the collaborative intelligence is a paradigm in which processing of a neural network is distributed between two or more different compute nodes, for example, devices, but generally, any nodes defined by functions. Herein, the term "node" does not refer to the foregoing neural network node. Instead, the (computing) nodes herein refer to (physically or at least logically) independent devices/modules that implement a part of the neural network. Such a device may be a mixture of different servers, different end-user devices, servers and/or user equipment and/or clouds and/or processors, and the like. In other words, the compute nodes may be considered as nodes belonging to a same neural network, and communicate with each other to transmit encoded data within/for the neural network. For example, to perform complex computations, one or more layers may be performed on a first device (for example, a device on the mobile side 1810), and one or more layers may be performed on another device (for example, a cloud server on the cloud side 1890). However, distribution may also be finer, and a single layer may be performed on a plurality of devices. In this disclosure, the term "a plurality of" means two or more. In some existing solutions, a part of a neural network function is performed on one or more devices (user equipment, edge devices, or the like), and an output (a feature map) is transferred to a cloud. The cloud is a collection of processing or computing systems located outside a device that is operating the part of the neural network. A concept of the collaborative intelligence is also extended to model training. In this case, data flows bidirectionally: from the cloud to a mobile device in a back propagation process of training, and from the mobile device to the cloud in a forward transfer and inference process of training (as shown in FIG. 18).

Some work proposes semantic image compression by encoding deep features and reconstructing an input image from the deep features. Uniform quantization-based compression is shown, followed by context-adaptive binary arithmetic coding (CABAC) from H.264. In some scenarios, sending an output of a hidden layer (a depth feature map) from the mobile component 1810 to the cloud 1890 may be more efficient, instead of sending compressed natural image data to the cloud and performing object detection based on a reconstructed image. Therefore, a quantization layer 1820 may be included by the mobile side 1810 for efficient compression of data (features) generated by the mobile side 1810. Correspondingly, the cloud side 1890 may include an inverse quantization layer 1860. Effective compression of feature maps is beneficial to image and video compression and reconstruction of human perception and machine vision. An entropy coding method, such as arithmetic coding, is a popular method for compressing deep features (for example, feature maps).

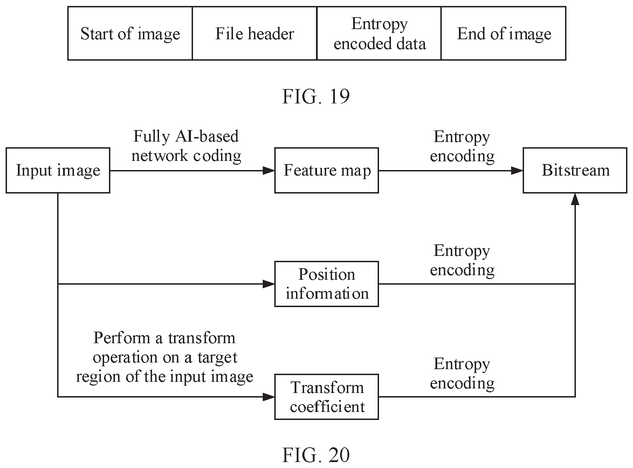

Refer to FIG. 19. FIG. 19 shows a structure of a bitstream according to an embodiment of this application. As shown in FIG. 19, the bitstream includes a start of image (Start of Image), a file header (File Header), entropy encoded data (Entropy Encoded Data), and an end of image (End of Image).

In a possible implementation, the position information, the transform coefficient, a Gaussian distribution parameter index number, a Gaussian distribution parameter, target probability distribution, and a target probability distribution index number may be stored in the file header.

In a possible implementation, a target quality residual matrix or a target quality matrix may be stored in the entropy encoded data.

Refer to FIG. 20. FIG. 20 is a diagram of layered coding according to an embodiment of this application.

In a video network transmission process, especially in an Internet-oriented real-time multi-user communication process, network bandwidths and device processing capabilities of a plurality of users are different. Such differentiated network bandwidth resources require adaptive bit rate adjustment and control for different users. Concepts of layering in time domain, space domain, and quality are proposed in layered coding. Information of an enhancement layer is added based on a base layer to obtain video content with a higher frame rate, higher resolution, and higher quality. Different users select whether to use a bitstream of the enhancement layer to match processing capabilities and network bandwidths of electronic devices of the users.

FIG. 20 is a diagram of a layered coding solution according to an embodiment of this application. As shown in FIG. 20, the layered coding solution includes: performing AI-based encoding on an input image to obtain a feature map; performing entropy encoding on the feature map to obtain a bitstream; writing position information that is used to record a target region of the input image into the bitstream; performing a transform operation on the target region of the input image; and writing transform coefficients used in the transform operation into the bitstream.

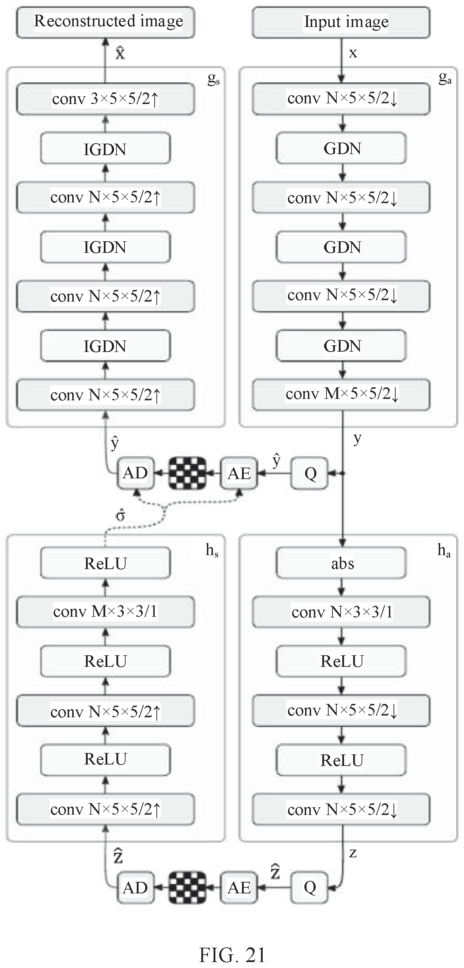

Refer to FIG. 21. FIG. 21 shows end-to-end image coding based on a hyper-prior structure according to an embodiment of this application.

With excellent performance of deep learning in various fields, researchers propose a deep learning-based end-to-end image coding scheme. A typical coding framework is shown in FIG. 21, and a specific solution is described below.

At an encoder side, a raw image is input into a feature extraction module, a Ga module, the Ga module outputs a feature map, and the feature map is input into a quantization module to obtain a quantized feature map. The feature map is extracted by a side information extraction module, a Ha module, to output side information z, the side information z is input into the quantization module for quantization. Quantized side information z is entropy encoded and then written into a bitstream. The decoder side performs an entropy decoding operation to obtain decoded side information z. The decoded side information z is input into a probability estimation module, an Hs module, to output probability distribution of each feature element in the feature map (entropy encoding is performed before decoding to ensure synchronous encoding and decoding). In addition, an entropy encoding module performs entropy encoding on each feature element in the feature map based on the probability distribution of each feature element, to obtain a compressed bitstream. The side information is also feature information, and is represented as a three-dimensional feature map. A quantity of feature elements included in the side information is less than a quantity of feature elements in the feature map. Sizes of both the feature map and feature map are M×W×H, where M indicates a quantity of channels, which is the same as a quantity of channels for a last layer of convolution, and W×H is related to a width and height of the input image and a downsampling rate (namely, a stride) set for a convolution operation at each layer in a network, and this figure indicates that the width and height of the input image are downsampled with a factor of 2 for four times.

At a decoder side, the side information is first obtained through decoding, then the side information is input into the Hs module, and probability distribution of to-be-decoded symbols is output. An entropy decoding module performs arithmetic decoding on each feature element in a feature map based on probability distribution of each feature element, to obtain a value of each feature element in the feature map, to obtain a decoded feature map, and inputs the feature map into an image reconstruction module, a Gs module, to output a reconstructed map.

It should be noted that, in the solution shown in FIG. 2, an input image includes three channels, R, G, and B, three components R, G, and B have same W and H, and image data with a size of 3×W×H may be input into a network for encoding and decoding. When the input image is in a YUV444 format, the network shown in FIG. 21 may also be used for encoding and decoding.

The apparatus, the computer storage medium, the computer program product, or the chip provided in embodiments are all configured to perform the corresponding methods provided above. Therefore, for beneficial effect that can be achieved by the apparatus, the computer storage medium, the computer program product, or the chip, refer to beneficial effect of the corresponding methods provided above. Details are not described herein again.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented through electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. An encoding method, comprising:
performing artificial intelligence AI-based encoding on an input image to obtain a feature map;
performing entropy encoding on the feature map to obtain a bitstream;
performing a transform operation on a target region of the input image to obtain transform coefficients;
encoding the transform coefficients into the bitstream; and
encoding position information into the bitstream, wherein the position information indicates a position of the target region in the input image.

2. The method according to claim 1, wherein performing the transform operation on the target region of the input image to obtain the transform coefficients comprises:
dividing the target region into a plurality of image blocks; and
performing the transform operation on the plurality of image blocks to obtain the transform coefficients.

3. The method according to claim 1 or 2, wherein encoding the transform coefficients into the bitstream comprises:
quantizing the transform coefficients; and
encoding the quantized transform coefficients into the bitstream.

4. The method according to any one of claims 1 to 3, wherein the transform operation comprises at least one of discrete cosine transform DCT, discrete Fourier transform DFT, or discrete wavelet transform DWT.

5. The method according to any one of claims 1 to 4, wherein the position information is mask (mask) image information, the mask image information comprises a first region, and the first region indicates the target region.

6. A decoding method, comprising:
performing entropy decoding on a bitstream to obtain a feature map;
performing AI-based decoding on the feature map to obtain a reconstructed image;
performing entropy decoding on the bitstream to obtain transform coefficients;
performing an inverse transform operation on the transform coefficients to obtain reconstructed pixel values of a target region;
performing entropy decoding on the bitstream to obtain position information, wherein the position information indicates a position of the target region; and
determining a fused image based on the position information, the reconstructed pixel values of the target region, and the reconstructed image.

7. The method according to claim 6, wherein determining the fused image based on the position information, the reconstructed pixel values of the target region, and the reconstructed image comprises:
determining the target region in the reconstructed image based on the position information; and
updating pixel values of the target region in the reconstructed image based on the reconstructed pixel values, to obtain the fused image.

8. The method according to claim 6 or 7, wherein performing entropy decoding on the bitstream to obtain the transform coefficients comprises:
performing entropy decoding on the bitstream to obtain quantized transform coefficients; and
performing inverse quantization on the quantized transform coefficients to obtain the transform coefficients.

9. An encoding apparatus, comprising an encoding unit and a transform unit, wherein
the encoding unit is configured to perform AI-based encoding on an input image to obtain a feature map;
the encoding unit is further configured to perform entropy encoding on the feature map to obtain a bitstream;
the transform unit is configured to perform a transform operation on a target region of the input image to obtain transform coefficients;
the encoding unit is further configured to encode the transform coefficients into the bitstream; and
the encoding unit is further configured to encode position information into the bitstream, wherein the position information indicates a position of the target region in the input image.

10. The apparatus according to claim 9, wherein the transform unit is specifically configured to:
dividing the target region into a plurality of image blocks; and
perform the transform operation on the plurality of image blocks to obtain the transform coefficients.

11. The apparatus according to claim 9 or 10, wherein the encoding unit is specifically configured to:
quantize the transform coefficients; and
encode the quantized transform coefficients into the bitstream.

12. A decoding apparatus, comprising a decoding unit, a transform unit, and a fusion unit, wherein
the decoding unit is configured to perform entropy decoding on a bitstream to obtain a feature map;
the decoding unit is further configured to perform AI-based decoding on the feature map to obtain a reconstructed image;
the decoding unit is further configured to perform entropy decoding on the bitstream to obtain transform coefficients;
the transform unit is configured to perform an inverse transform operation on the transform coefficients to obtain reconstructed pixel values of a target region;
the decoding unit is further configured to perform entropy decoding on the bitstream to obtain position information, wherein the position information indicates a position of the target region; and
the fusion unit is configured to determine a fused image based on the position information, the reconstructed pixel values of the target region, and the reconstructed image.

13. The apparatus according to claim 12, wherein the fusion unit is specifically configured to:
determining the target region in the reconstructed image based on the position information; and
updating pixel values of the target region in the reconstructed image based on the reconstructed pixel values, to obtain the fused image.

14. The apparatus according to claim 12 or 13, wherein the decoding unit is specifically configured to:
perform entropy decoding on the bitstream to obtain quantized transform coefficients; and
perform inverse quantization on the quantized transform coefficients to obtain the transform coefficients.

15. An encoding apparatus, comprising at least one processor and a memory, wherein the at least one processor executes a program or instructions stored in the memory, so that the encoding apparatus implements the method according to any one of claims 1 to 5.

16. A decoding apparatus, comprising at least one processor and a memory, wherein the at least one processor executes a program or instructions stored in the memory, so that the decoding apparatus implements the method according to any one of claims 6 to 8.

17. A bitstream storage method, comprising: obtaining and storing a bitstream obtained based on the method according to any one of claims 1 to 8.

18. A bitstream storage apparatus, wherein the apparatus is configured to: obtain and store a bitstream obtained based on the method according to any one of claims 1 to 8.

19. A bitstream transmission method, comprising: obtaining and transmitting a bitstream obtained based on the method according to any one of claims 1 to 8.

20. A bitstream transmission apparatus, wherein the apparatus is configured to: obtain and transmit a bitstream obtained based on the method according to any one of claims 1 to 8.

21. A computer-readable storage medium, wherein the computer-readable storage medium stores a bitstream obtained based on the method according to any one of claims 1 to 8.

22. A computer-readable storage medium, configured to store a computer program, wherein when the computer program is run on a computer or a processor, the computer or the processor is enabled to implement the method according to any one of claims 1 to 8.

23. A computer program product, wherein the computer program product comprises instructions, and when the instructions are run on a computer or a processor, the computer or the processor is enabled to perform the method according to any one of claims 1 to 8.
